# FASCICULE DE BREVET EUROPEEN

(11) **EP 2 443 407 B1**
(45) Date de publication et mention de la délivrance du brevet: **09.05.2018**
(21) Numéro de dépôt: 10734767.6
(22) Date de dépôt: 07.06.2010
(51) Int. Cl.: F27B 13/14, F27D 19/00, F27D 21/00

(54) **PROCEDE DE REGULATION D'UN FOUR DE CUISSON D'ANODES ET FOUR ADAPTE A SA MISE EN OEUVRE**
VERFAHREN ZUR EINSTELLUNG EINES OFENS ZUM BRENNEN VON ANODEN UND ZUR UMSETZUNG DES VERFAHRENS GEEIGNETER OFEN
METHOD FOR ADJUSTING AN OVEN FOR BAKING ANODES, AND OVEN SUITABLE FOR IMPLEMENTING SAME

(30) Priorité: 15.06.2009 FR 0902895
(43) Date de publication de la demande: 25.04.2012
(73) Titulaire: Rio Tinto Alcan International Limited, Montréal, QC H3B 0E3 (CA)
(72) Inventeur: MORALES, François, F-73300 Montvernier (FR); DE LA TORRE, Alain, F-73300 Saint Jean De Maurienne (FR)
(74) Mandataire: Malcoiffe, Julien
(86) Numéro de dépôt international: PCT/FR2010/000413
(87) Numéro de publication internationale: WO 2010/128226

(56) Documents cités:
- FR-A1- 2 777 072
- US-A- 3 744 959
- US-B1- 6 436 335

## Description

La présente invention concerne un procédé de régulation d'un four à cuisson dit « à feu tournant » (« ring furnace » en Anglais) de blocs carbonés, tout particulièrement des anodes en carbone utilisées pour la production d'aluminium par électrolyse.

On connaît déjà des méthodes de régulation de ce type de four, comme dans les documents de brevet FR 2 600 152, FR 2 614 093, EP1070224, et US3744959 et WO 91/19147.

Ce type de four, dit également « à chambres ouvert », comprend, comme décrit dans ces documents cités, dans le sens longitudinal, une pluralité de chambres de préchauffage naturel, de cuisson, de soufflage, de refroidissement forcé et de déchargement, et de chambres non actives, chaque chambre étant constituée, dans le sens transversal, par la juxtaposition, en alternance, de cloisons chauffantes creuses dans lesquelles circulent les gaz, et d'alvéoles dans lesquelles sont empilés les blocs carbonés à cuire, les blocs étant noyés dans une poussière carbonée appelée « poussier ». Les gaz chauds ou fumées de combustion assurant la cuisson circulent en un flux dans les cloisons creuses, à paroi mince, s'étendant dans le sens longitudinal du four. Les cloisons creuses sont munies, à leur partie supérieure, d'ouvertures obturables dites « ouvreaux ». Elles peuvent comporter en outre des chicanes ou des entretoises pour allonger et répartir plus uniformément le trajet du flux de gaz ou fumées de combustion. Les alvéoles sont ouvertes à leur partie supérieure pour permettre le chargement, par empilement, des blocs crus et le déchargement des blocs cuits refroidis.

Ce type de four comporte généralement deux travées longitudinales dont la longueur totale peut atteindre plus d'une centaine de mètres et comportant une succession de chambres séparées par des murs transversaux. Les deux travées sont mises en communication à leurs extrémités longitudinales par des carneaux de virage qui permettent de transférer les gaz d'une travée à l'autre.

Le chauffage du four est assuré par des rampes de chauffage ayant une longueur égale à la largeur des chambres et comportant un ou plusieurs brûleurs, ou un ou plusieurs injecteurs par cloison creuse. Les injecteurs ou brûleurs sont introduits, via les ouvreaux, dans les cloisons creuses des chambres concernées. En amont des brûleurs ou injecteurs (par rapport au sens d'avancement du feu tournant correspondant également au sens de circulation des gaz dans les cloisons creuses), on dispose de jambes de soufflage d'air de combustion montées sur une rampe amont de soufflage munie de ventilateurs, ces jambes de soufflage étant connectés, via les ouvreaux, aux dites cloisons. En aval des brûleurs ou injecteurs, on dispose de jambes d'aspiration des fumées de combustion, montées sur une rampe aval d'aspiration alimentant des centres de captation et de traitement de fumées, et dotées de volets permettant de contrôler les débits d'aspiration des jambes d'aspiration aux niveaux souhaités. Le chauffage est assuré à la fois par la combustion de combustible dit primaire injecté dans les chambres de cuisson, et par la combustion de combustible dit secondaire constitué par des matières volatiles combustibles (tel que par exemple des hydrocarbures aromatiques polycycliques) émises par les blocs. Ces matières volatiles combustibles sont plus particulièrement émises par le brai de houille des blocs, lors de la montée en température des blocs dans les chambres de préchauffage naturel. Les cloisons étant en dépression dans les chambres de préchauffage naturel, les matières volatiles combustibles quittent les alvéoles en traversant la cloison creuse par des ouvertures prévues à cet effet et viennent brûler avec l'oxygène restant dans les fumées de combustion qui circulent dans les cloisons creuses de ces chambres.

Typiquement, une dizaine de chambres sont « actives » simultanément : quatre dans une zone de soufflage, trois dans une zone de chauffage, et trois dans une zone de préchauffage naturel.

Au fur et à mesure que la cuisson se produit, par exemple par cycles de 28 heures, on fait avancer (tourner) d'une chambre l'ensemble « rampe amont de soufflage / rampe de chauffage / rampe aval d'aspiration », chaque chambre assurant ainsi successivement différentes fonctions :
- en aval de la zone de préchauffage naturel (chambre non « active » ou chambre de chargement), une fonction de chargement des blocs carbonés crus, puis,
- dans la zone de préchauffage naturel, une fonction de préchauffage naturel des cloisons, blocs carbonés, etc. par les fumées de combustion circulant dans les cloisons et la combustion du combustible secondaire, puis,
- dans la zone de cuisson, une fonction de chauffage des blocs carbonés à 1100-1200°C, et enfin,
- dans la zone de soufflage, une fonction de refroidissement des blocs carbonés par de l'air extérieur froid soufflé dans les cloisons creuses et, corrélativement, de préchauffage de cet air circulant dans les cloisons creuses constituant le comburant du four par la chaleur restituée par les cloisons, les blocs carbonés etc.,
- la zone de soufflage étant suivie, en aval, d'une zone de refroidissement forcé et de déchargement des blocs carbonés refroidis.

La méthode de régulation usuelle de ce type de four consiste à réguler en température et/ou en pression un certain nombre de chambres du four. Typiquement, sur 10 chambres actives simultanément, 4 ont des mesures de température et 2 ont des mesures de pression. D'une part, les trois chambres de la zone de chauffage comprennent chacune une rampe de chauffage et sont régulées en fonction de la température des fumées de combustion, l'injection de combustible étant typiquement ajustée pour que la température des fumées de combustion suive une courbe de montée en température dans le temps. D'autre part, la vitesse des ventilateurs de la rampe de soufflage est typiquement régulée en fonction d'une pression mesurée en amont des brûleurs. Enfin, l'ouverture des volets de la rampe d'aspiration peut être régulée en fonction d'une dépression mesurée dans une chambre située entre les rampes de chauffage et la rampe d'aspiration. Mais, le plus souvent, en particulier dans les fours les plus récents, ladite dépression est elle-même pilotée par une consigne de température, typiquement la température des fumées de combustion en un point de la zone de préchauffage naturel, de sorte que lesdits volets sont pilotés par une mesure de température et sa comparaison à une valeur de consigne évoluant dans le temps.

Le résultat généralement attendu d'un procédé de régulation est de faire suivre aux blocs carbonés une montée en température en respectant les différentes phases de la cuisson et en évitant les imbrulés donnant naissance à des fumées d'imbrulés et des dépôts. La montée en température des anodes comprend généralement une montée en température sensiblement linéaire jusqu'à environ 1100-1200°C, correspondant à la température finale de cuisson des blocs carbonés et dépendant principalement de la nature des matières premières constituant les blocs carbonés. Pour obtenir cette montée en température voulue des anodes, on détermine une courbe de température des gaz dans les cloisons, qui tient également compte de l'apport de calories du à la combustion des matières volatiles combustibles.

Comme cela est connu par exemple de la demande de brevet FR 2 600 152 divulguant un procédé de régulation classique, la température voulue dans la zone de cuisson est obtenue par régulation de l'injection du combustible primaire dans la zone de cuisson à partir des mesures de température dans les cloisons. La régulation de la température des gaz dans la zone de préchauffage naturel est contrôlé par le réglage de l'aspiration par les jambes d'aspiration et du soufflage par les jambes de soufflage, donc des débits des flux d'air dans les différentes cloisons. En fait, la température est mesurée et le débit modifié en fonction de la loi de température assignée. Le chauffage de la zone de préchauffage naturel est alors réalisé par la circulation la plus hermétique possible dans les cloisons de la totalité des gaz ou fumées de combustion.

Dans cette demande de brevet FR 2 600 152, ce débit d'air peut en outre être régulé de façon automatisée pour dépendre d'une mesure d'opacité de la fumée dans les piquages d'aspiration, ainsi que de la température régnant dans les cloisons de la zone de préchauffage naturel. On augmente logiquement le débit d'air circulant dans les cloisons dans les zones où sont brulés les combustibles primaire et secondaire pour diminuer les fumées d'imbrulés.

Dans la demande de brevet FR 2 614093, ce débit d'air, ou quantité d'air nécessaire et suffisante à la combustion pour obtenir la combustion complète à la fois des matières volatiles combustibles dégagées au cours de la cuisson des blocs carbonés et du combustible primaire injecté, est calculé sur la base de la quantité de combustible primaire injecté et de la quantité de matière volatiles combustibles contenues dans les blocs carbonés et relâchés en fonction de la température.

Dans la demande de brevet WO 91/19147, ce débit d'air est régulé et minimisé en contrôlant le rapport oxygène/carburant dans le four par mesure de la teneur en oxygène dans les cloisons et en injectant si nécessaire de l'air dans les cloisons juste en aval de la zone de cuisson pour que la teneur en oxygène soit suffisante pour permettre la combustion de toutes les matières volatiles combustibles. L'ajout d'air froid directement après la zone de cuisson pour la combustion des matières volatiles combustibles présente l'inconvénient de refroidir les gaz et de rendre hasardeuse l'inflammation spontanée des matières volatiles combustibles libérées par les blocs carbonés.

On connaît encore du brevet EP 1 070 224 un système de régulation permettant d'optimiser la combustion et le transfert de chaleur en palliant à de brusques variations de paramètres par suivi d'une valeur de consigne basée sur les flux enthalpiques.

Un problème récurrent dans le domaine des fours à feu tournant est donc la formation de fumées d'imbrulés dans les cloisons. Ces fumées d'imbrulés se formant principalement lorsque la quantité d'oxygène, au voisinage directe du combustible primaire injecté ou du combustible secondaire relâché par les blocs carbonés, est insuffisante pour assurer une combustion complète du combustible primaire, mais également du combustible secondaire, l'art antérieur propose donc pléthore de procédés de régulation permettant de déterminer la quantité d'air à introduire dans les cloisons. Ces procédés de régulation sont basés essentiellement sur des mesures de température et des mesures de pression, dans un grand nombre de chambres, et dans les différentes cloisons d'une même chambre. Des mesures complémentaires, comme indiqué dans l'état de la technique cité, peuvent venir compléter ces mesures de base.

Il est également constant que le débit de gaz circulant dans les cloisons doit être malgré tout tenu à un niveau minimum de sorte à limiter au maximum les infiltrations d'air résultant de la dépression, principalement dans la zone de préchauffage naturel.

De ces deux contraintes antagonistes, l'apport suffisant d'air pour une combustion complète des combustibles primaire et secondaire est toutefois en pratique privilégié pour des raisons de sécurité.

Il importe notamment que, dans la zone de préchauffage naturel, le combustible secondaire soit aspiré vers les cloisons creuses et brûle immédiatement en présence de l'oxygène résiduel présent dans les fumées de combustion. Sinon, les fumées d'imbrulés ou vapeurs de brai peuvent se déposer et encrasser les jambes d'aspiration, la rampe aval d'aspiration et les carneaux qui mènent au centre de captation et de traitement de fumées. Ces dépôts peuvent alors s'enflammer au contact de particules incandescentes de poussier transportées par la circulation des gaz. Ces feux endommagent les canalisations et les collecteurs de fumées. Face à ces risques, des marges de sécurité sont prises en augmentant en conséquence les débits des fumées de combustion aspirées pour limiter les fumées d'imbrulés.

Une augmentation des débits dans les cloisons génère toutefois une modification complète des bilans des transferts thermiques dans les cloisons. L'apport d'air préchauffé vers la zone de cuisson et venant de la zone de soufflage est augmenté de sorte qu'il est nécessaire de bruler plus de combustible primaire pour atteindre la température de cuisson des anodes. Aussi, l'apport d'air chaud à la zone de préchauffage naturel et venant de la zone de cuisson est augmenté de sorte que la montée en température dans la zone de préchauffage naturel est accélérée et peut s'écarter de la loi de montée en température préétablie à suivre. Or, la montée en température dans la zone de préchauffage naturel détermine l'endroit dans les cloisons de la zone de préchauffage naturel où se produit la combustion du combustible secondaire et le positionnement du front de combustion du combustible secondaire, couramment appelé front de dégazage. En effet, le combustible secondaire est relâché par les blocs carbonés en fonction de la température des blocs carbonés. Par front de dégazage, on entend la limite aval de la combustion des matières volatiles combustibles. Dans les procédés de régulation connus, ce front de dégazage est en perpétuel mouvement dans le sens de l'avancement du feu. Le positionnement du front de dégazage est un paramètre très important de la régulation des fours à feu tournant pour anodes en carbone. Ce front de dégazage doit être maintenu à une distance raisonnable des jambes d'aspiration de manière à limiter les risques de détérioration des équipements et les risques d'incendie dans les jambes d'aspiration, la rampe aval d'aspiration, les carneaux et le centre de captation et de traitement des gaz par les flammes inhérentes à la combustion des combustibles secondaires ou par des particules incandescentes de poussier enflammées par ces flammes et entraînées par la circulation des gaz. Par distance raisonnable, on entend par exemple que la distance entre le front de dégazage et les jambes d'aspiration est suffisante pour que les particules incandescentes de poussier enflammées au niveau du front de dégazage s'éteignent. Par exemple pour un four comportant une dizaine de chambres dont trois en préchauffage naturel, le front de dégazage ne doit pas avancer en aval du milieu de la première chambre (sur laquelle est installée la rampe d'aspiration aval). Le positionnement du front de dégazage est un critère de sécurité important dans la régulation des fours.

Aussi, une augmentation du débit des gaz circulant dans les cloisons provoque dans les fours de l'art antérieur une avancée du front de dégazage vers la rampe d'aspiration, ce qui peut être préjudiciable à la sécurité du four et du personnel opérationnel.

Sur de nombreux fours, il est impossible, avec des cycles habituels de fonctionnement, d'augmenter suffisamment le débit de circulation des gaz pour éliminer les fumées d'imbrulés tout en conservant un positionnement adéquat du front de dégazage. C'est notamment le cas de fours assez sensibles à la formation de fumées d'imbrulés tels que certains fours anciens ou dégradés. C'est également le cas de fours à faible perte de charge, comme les fours « sans chicanes » ou à entretoises, tel que connus du brevet EP1093560, pour lesquels le parcours des gaz est plus court et les pertes de charges sont faibles sur le parcours des gaz de sorte qu'une augmentation même faible du débit des gaz provoque une avancée très importante du front de dégazage.

Aussi, si les systèmes de régulation connus peuvent être appropriés pour des cuissons avec des cycles habituels de fonctionnement pour lesquels les fours ont été dimensionnés, c'est-à-dire des cycles de rotation du système de chauffage compris entre 24 heures et 32 heures pour par exemple une cuisson sur une dizaine de chambres, il est impossible de les utiliser pour des cuissons avec des cycles longs, supérieurs ou égaux à 33 heures, car, du fait du temps important laissé à la montée en température dans les chambres en préchauffage naturel et du débit des gaz important nécessaire à la bonne combustion des combustibles primaire et secondaire sans formation de fumées d'imbrulés, la température des anodes et des gaz s'élève trop fortement dans la chambre à proximité de la rampe d'aspiration aval et le front de dégazage se rapproche trop de la rampe d'aspiration aval.

La modification de la durée des cycles étant dictée par des raisons économiques pour maintenir la production de blocs carbonés en adéquation avec la demande, il existe un important besoin pour un procédé de régulation autorisant une importante flexibilité quant à la durée des cycles utilisables.

En définitive, la conduite et la régulation actuelle des fours se caractérise par l'adoption d'une grande marge de sécurité sur le positionnement du front de dégazage dans la zone de préchauffage naturel qui influe directement sur un des paramètres principaux de la régulation du four, a savoir le débit des gaz circulant dans les cloisons creuses qui est généré par le soufflage d'air en amont des chambres de soufflage et l'aspiration des fumées de combustion en aval des chambres de préchauffage naturel. La confrontation opérationnelle entre la marge de sécurité pour limiter les fumées d'imbrulés et la marge de sécurité sur le positionnement du front de dégazage implique que l'application des procédés de régulation actuels se trouve restreinte à certains cas optimums de durées de cycle et/ou de fours idéaux...

La marge de sécurité adoptée pour réguler le débit des gaz par rapport au positionnement du front de dégazage aboutit également parfois à une montée en température des gaz trop lente, notamment dans la chambre directement en amont de la rampe d'aspiration, et à un phénomène de dégazage à froid, c'est-à-dire que des matières volatiles combustibles relâchées par les anodes qui ont atteint une température de relargage ne s'enflamment pas lorsqu'elles entrent dans les cloisons creuses car la température des gaz circulant dans les cloisons en face de ces anodes n'est pas suffisamment élevée pour provoquer l'inflammation de ces matières volatiles combustibles. Ces matières volatiles combustibles non brulées se condensent alors dans les cloisons creuses et provoquent des dépôts préjudiciables au bon fonctionnement du four.

La maîtrise du positionnement du front de dégazage est un problème constant dans le domaine des fours à feu tournant, ce front de dégazage ne pouvant, avec les procédés de régulation connus, être positionné de façon fiable et précise mais devant être maintenu assez loin de la rampe d'aspiration pour des raisons de sécurité sans en être trop éloigné pour éviter les dégazages à froid.

La présente invention vise à résoudre ces problèmes en proposant un procédé de régulation amélioré permettant d'élargir la gamme d'utilisation des fours à feu tournant. La présente invention vise en outre à proposer un autre procédé de régulation simple et fiable permettant de réduire les problèmes de combustion.

### DESCRIPTION DE L'INVENTION

A cet effet, l'invention concerne un procédé de régulation d'un four de cuisson d'anodes en carbone pour la production d'aluminium par électrolyse, le four comprenant :
- des cloisons creuses longitudinales dans chacune desquelles peut circuler avec un certain débit un flux de gaz chauds de cuisson à une certaine température, les cloisons creuses définissant entre elles des alvéoles de réception des anodes à cuire et comprenant une pluralité d'ouvreaux,
- et un système de chauffage tournant par rapport aux cloisons creuses, qui comporte une rampe amont de plusieurs jambes de soufflage d'air dans les différentes cloisons creuses, une rampe aval de plusieurs jambes d'aspiration de gaz depuis les différentes cloisons creuses et, entre lesdites rampes amont et aval, au moins une rampe de chauffage pourvue d'au moins un brûleur ou au moins un injecteur de combustible par cloison ;
des lignes pour la circulation des flux de gaz dans les cloisons creuses étant formées dans les cloisons creuses entre les jambes de soufflage et les jambes d'aspiration correspondantes;
le procédé comprenant une phase de préchauffage naturel des cloisons et des anodes au cours de laquelle les anodes libèrent des matières volatiles combustibles qui brulent dans les cloisons creuses en formant un front de dégazage pour préchauffer les gaz, les cloisons et les anodes, cette phase de préchauffage naturel s'effectuant dans une zone de préchauffage naturel du four en aval de la rampe de chauffage,
caractérisé en ce que la zone de préchauffage naturel est scindée en au moins une première zone de préchauffage naturel située à une première distance de la rampe de chauffage et une seconde zone de préchauffage naturel située à une seconde distance de la rampe de chauffage, la première distance étant plus grande que la seconde distance ,
et dans lequel on modifie les flux de gaz circulant dans les cloisons creuses de sorte à contrôler les flux de gaz traversant la première zone de préchauffage naturel à partir des flux de gaz sortant de la seconde zone de préchauffage naturel pour réguler la montée en température des cloisons et des anodes dans la première zone de préchauffage naturel et contrôler le positionnement du front de dégazage.

Cette modification de flux intervient entre la première zone de préchauffage naturel et la seconde zone de préchauffage naturel, notamment par adjonction d'un flux venant de l'extérieur des cloisons au flux sortant de la seconde zone de préchauffage, par adjonction d'un fluide réfrigérant dans le flux sortant de la seconde zone de préchauffage ou par détournement vers l'extérieur des cloisons d'une partie du flux sortant de la seconde zone de préchauffage naturel.

La première zone de préchauffage naturel comporte donc de préférence un système de contrôle propre permettant de réguler la température des gaz et le débit des gaz circulant dans la première zone de préchauffage naturel, quels que soient la température des gaz et le débit des gaz sortant de la seconde zone de préchauffage naturel. On dissocie ainsi le contrôle de la température des gaz et du débit du flux de gaz traversant ladite première zone de préchauffage naturel du contrôle de la température des gaz et du débit du flux de gaz sortant de la seconde zone de préchauffage naturel. Les gaz sortant de seconde zone de préchauffage peuvent toutefois avantageusement être utilisés pour apporter l'énergie thermique requise pour la montée en température des anodes dans la première zone de préchauffage naturel prévue par la régulation.

La montée en température des anodes et le positionnement du front de dégazage dans la première zone de préchauffage naturel ne sont par conséquent plus uniquement liés à l'énergie thermique transportée par les gaz dans la zone amont ou seconde zone de préchauffage naturel comme c'était le cas avec les procédés de régulation de l'art antérieur où la totalité du flux de gaz sortant de la seconde zone de préchauffage naturel était transférée de façon directe et la plus hermétique possible vers la première zone de préchauffage naturel. L'énergie thermique des gaz peut être définie, dans la zone de préchauffage naturel du four disposée en aval du front de dégazage, par le débit du flux de gaz et la température des gaz. Selon l'invention on peut n'utiliser que partiellement l'énergie thermique transportée par les gaz sortant de la seconde zone de chauffage pour réguler la montée en température des cloisons et blocs carbonés dans la première zone de préchauffage naturel. Seule la quantité d'énergie thermique voulue est utilisée.

Selon l'invention, les transferts thermiques s'opérant dans cette première zone de préchauffage naturel peuvent ainsi être contrôlés indépendamment des transferts thermiques s'opérant dans la seconde zone de préchauffage naturel et également dans le reste du four. Cela permet d'influer sur la montée en température des anodes dans la première zone et donc de la contrôler. Contrôler cette montée en température des anodes dans cette première zone de préchauffage naturel permet de contrôler le dégagement des matières volatiles combustibles et donc le positionnement du front de dégazage dans la zone de préchauffage naturel, notamment en fin de cycle de cuisson.

Le débit des gaz circulant dans les cloisons creuses n'a donc plus à être limité par les contraintes sur le positionnement du front de dégazage.

Le débit des gaz circulant dans la zone de soufflage, la zone de cuisson et la seconde zone de préchauffage n'est donc plus qu'un paramètre secondaire parmi d'autres pour influer sur le transfert thermique et la montée en température des anodes dans la première zone de préchauffage naturel qui permet une régulation du positionnement du front de dégazage de sorte qu'il est possible de réguler et de contrôler le positionnement du front de dégazage quelque soit le débit et la température des gaz circulant dans la zone de soufflage, la zone de cuisson et la seconde zone de préchauffage. Ce débit peut par conséquent être régulé et augmenté de façon suffisante pour réduire ou empêcher les problèmes de combustion, notamment pour favoriser la combustion des matières volatiles combustibles.

Aussi, comme le positionnement du front de dégazage peut être régulé avec précision de façon dissociée du débit des gaz circulant dans la zone de soufflage, la zone de cuisson et la seconde zone de préchauffage, il n'y a plus de limite à l'utilisation des fours dans des conditions inadéquates ou non permises précédemment par les procédés de régulation de l'art antérieur.

La mise en oeuvre du procédé selon l'invention est donc particulièrement avantageuse sur un four avec des cloisons sans chicanes, à l'intérieur duquel les pertes de charge sont généralement faibles.

La mise en oeuvre du procédé selon l'invention est également particulièrement avantageuse lorsque l'on souhaite faire fonctionner un four avec des cycles longs supérieurs à 33 heures.

La mise en oeuvre du procédé selon l'invention est également particulièrement avantageuse pour les fours de grande taille comportant un grand nombre de rampes de chauffage, par exemple 4 ou plus, et qui nécessitent donc un fort apport d'oxygène pour une bonne combustion.

La mise en oeuvre du procédé selon l'invention est également particulièrement avantageuse lorsque la quantité de brai dans le four est particulièrement importante et nécessite un fort apport d'oxygène pour une bonne combustion des matières volatiles combustibles, par exemple lorsque les anodes ont une forte teneur en brai, lorsque le nombre d'anodes dans les alvéoles est élevé ou lorsque les anodes sont de grande taille.

Le procédé selon l'invention autorise une liberté totale quant au réglage du débit des gaz circulant dans les zones du four autres que la première zone de préchauffage naturel, à l'intérieur desquels se produisent les combustions des combustibles primaire et secondaire. Il est donc possible de réguler ce débit de la façon indiquée dans les procédés déjà connus exposés ci-dessus par exemple par calcul de la combustion de l'ensemble des combustibles primaire et secondaire ou par détection des fumées d'imbrulés.

Il est également possible d'augmenter encore ce débit au delà des valeurs précédemment requises. Ce débit permet alors avantageusement de drainer les matières volatiles combustibles des alvéoles vers les cloisons creuses en forte dépression pour leur combustion complète. Il est par conséquent avantageux d'augmenter le débit de quelques pourcents au-delà de ce qui est nécessaire pour empêcher les problèmes de combustion afin d'éviter les problèmes de l'art antérieur provoqués par un mauvais drainage des matières volatiles combustibles ; c'est-à-dire les vapeurs de brai non drainées restant dans le poussier et provoquant des collages néfastes entre anodes, entre poussier et anodes ou entre poussier et cloisons, ou formant des dépôts de chrysène de brai à la surface des alvéoles.

Par ailleurs, comme il n'est plus nécessaire de conserver une marge de sécurité pour réguler le débit des gaz par rapport au positionnement du front de dégazage, le débit des gaz peut donc être augmenté de façon suffisante pour que les gaz soient en permanence suffisamment chauds en face des anodes au niveau du front de dégazage pour éviter le dégazage à froid des anodes.

L'augmentation du débit des gaz circulant dans les cloisons creuses entraîne par conséquent une optimisation énergétique des fours du fait que :
- toutes les matières volatiles combustibles sont drainées vers les cloisons creuses ;
- toutes les matières volatiles combustibles brulent dans les cloisons car la température des gaz dans les cloisons est suffisante pour enflammer ces matières volatiles combustibles ; et
- les combustibles primaire et secondaire brulent de façon complête.

Le résultat d'un tel bilan va à l'encontre des idées reçues qui veulent que le rendement énergétique d'un four se trouve diminué par une augmentation du débit d'air du fait de l'augmentation des infiltrations d'air froid dans les cloisons creuses.

Selon l'invention, le débit et la température des gaz traversant ladite première zone de préchauffage naturel peuvent être dissociés du débit et de la température des gaz sortant de la seconde zone de préchauffage naturel pendant tout le cycle ou pendant seulement une partie du cycle.

Lorsque cette dissociation a lieu sur une partie seulement du cycle, la régulation du four pendant l'autre partie du cycle est une régulation classique de type connu au cours de laquelle les gaz sortant de la seconde zone de préchauffage naturel entrent dans la première zone de préchauffage naturel sans modification particulière de débit ou de température.

Selon un autre aspect de l'invention, cette dissociation peut encore servir de marge de manoeuvre permettant d'assurer un maintien du débit de circulation de gaz important dans le four tout en maintenant le front de dégazage à distance raisonnable de la rampe aval d'aspiration sans être mis en oeuvre de façon systématique à chaque cycle et pour chaque cloison. C'est-à-dire que le procédé selon l'invention prend le relai d'un procédé classique de type connu en cas de dérive non souhaitée.

Selon un premier mode de mise en oeuvre du procédé selon l'invention, on refroidi les gaz qui sortent de la seconde zone de préchauffage naturel avant qu'ils traversent la première zone de préchauffage naturel. Ces gaz refroidis transmettent alors moins d'énergie thermique aux cloisons et aux anodes qu'ils ne l'auraient fait si ils avaient été transférés en totalité de façon directe et hermétique comme dans les procédés connus. On régule alors le refroidissement des gaz qui sortent de la seconde zone de préchauffage naturel avant qu'ils traversent la première zone de préchauffage naturel pour contrôler la montée en température des anodes et le positionnement du front de dégazage.

Ce refroidissement peut avantageusement être mis en oeuvre par introduction dans les cloisons d'air extérieur venant de l'extérieur des cloisons entre la première et la seconde zone de préchauffage naturel. Cet air extérieur, substantiellement plus froid que les gaz sortant de la seconde zone de préchauffage naturel, se mélange aux gaz sortant de la seconde zone de préchauffage naturel pour les refroidir avant de traverser la première zone de préchauffage naturel. Les gaz traversant la première zone de préchauffage naturel ont une température plus basse que les gaz sortant de la seconde zone de préchauffage naturel. La quantité d'air extérieur introduite et la température de cet air extérieur permet de réguler la montée en température des anodes et le positionnement du front de dégazage.

Cet air extérieur est avantageusement introduit par ouverture des ouvreaux disposés entre la première et la seconde zone de préchauffage naturel pour refroidir les gaz sortant de la seconde zone de préchauffage naturel par entrée d'air extérieur. L'air extérieur est aspiré dans les cloisons du fait de la dépression régnant dans les cloisons de la zone de préchauffage naturel et traverse la première zone de préchauffage naturel avec les gaz sortant de la seconde zone de préchauffage naturel du fait de l'aspiration par la rampe aval d'aspiration disposée en aval de la première zone de préchauffage naturel.

Avantageusement, on augmente le débit de gaz aspiré par les jambes d'aspiration pour maintenir le débit du flux de gaz sortant de la seconde zone de préchauffage lors de l'introduction d'air extérieur ou de l'ouverture des ouvreaux.

On régule ainsi le débit et la température des gaz traversant ladite première zone de préchauffage naturel de manière à contrôler le positionnement du front de dégazage sans affecter le débit et la température des gaz traversant la seconde zone de préchauffage naturel. Un tel procédé de régulation selon l'invention peut être mis en oeuvre sur des fours existants sans nécessiter de modifications. Il consiste en une nouvelle approche de la régulation des fours à feu tournant mais peut être mis en oeuvre conjointement avec un procédé de régulation classique de l'art antérieur. L'ouverture des ouvreaux n'interfère pas avec les paramètres de régulation ou de sécurité du four.

Le procédé selon l'invention va à l'encontre de toutes les prescriptions dans le domaine des fours à feu tournant pour lesquels on préconise de maintenir la meilleure étanchéité possible des cloisons et alvéoles pendant toute la durée de la cuisson des anodes pour limiter au maximum les infiltrations d'air extérieur dans les cloisons. Selon l'invention, on détermine l'endroit où l'on veut faire rentrer cet air extérieur dans les cloisons et on régule la quantité d'air extérieur introduit dans les cloisons de sorte à réguler la température et le débit des gaz circulant dans les cloisons en aval de l'entrée d'air extérieur, indépendamment de la température et du débit des gaz circulant dans les cloisons en amont de cette entrée d'air. Cela permet de contrôler la montée en température des anodes et donc la position du front de dégazage.

Les ouvreaux peuvent être ouverts de manière manuelle par le personnel opérationnel du four ou encore de manière automatique, au moyen par exemple de systèmes de vanne disposés préalablement sur les ouvreaux situés entre la première zone de préchauffage naturel et la seconde zone de préchauffage naturel et qui peuvent être actionnés pour ouvrir les ouvreaux.

Selon l'invention, l'ouverture des ouvreaux peut être complète ou partielle, c'est-à-dire avec un certain pourcentage d'ouverture de sorte à réguler la quantité d'air entrant dans les cloisons, ce pourcentage d'ouverture des ouvreaux pouvant par ailleurs varier dans le temps.

Le procédé selon l'invention comprend avantageusement les étapes consistant à, pour chaque ligne pour la circulation des flux de gaz dans les cloisons creuses, mesurer la température en au moins un point donné de la zone de préchauffage naturel ; comparer la température mesurée à une référence correspondante ; et commander une action pour le refroidissement des gaz sortant de la seconde zone de préchauffage naturel avant de traverser la première zone de préchauffage naturel en fonction du résultat de cette comparaison, par exemple l'ouverture des ouvreaux avec un pourcentage d'ouverture qui est fonction du résultat de la comparaison. La température est plus particulièrement mesurée dans la première zone de préchauffage et /ou dans la seconde zone de préchauffage puis comparée à une référence constituée par une loi exprimant la température en fonction du temps.

La commande d'une action pour le refroidissement des gaz qui sortent de la seconde zone de préchauffage naturel avant de traverser la première zone de préchauffage peut par ailleurs être avantageusement déterminée en fonction du temps, notamment sur une certaine période de chaque cycle. Les ouvreaux peuvent par exemple être à demi ouverts pendant une période spécifiée en début ou en fin de chaque cycle.

Avantageusement, le procédé selon l'invention comprend en outre une étape consistant à installer sur des ouvreaux du four une pluralité de manchettes souples munies d'un système de vanne pour l'ouverture et la fermeture des ouvreaux. D'autres dispositifs automatisés destinés à ouvrir partiellement ou totalement les ouvreaux peuvent encore être envisagés dans le cadre de la présente invention.

On peut régler le débit de circulation des gaz dans les cloisons de façon à ce que la totalité des combustibles apportés par au moins un brûleur ou au moins un injecteur de combustible et par les matières volatiles combustibles puisse être brulée.

On peut encore régler le débit de circulation des gaz dans les cloisons de la manière suivante : pour chaque ligne de circulation de gaz, on mesure le niveau des fumées dans les cloisons, notamment au moyen d'une mesure d'opacité ou d'une mesure de la teneur en monoxyde de carbone (CO) ; on compare cette mesure à une référence correspondante ; et on commande un ajustement du débit de circulation des gaz en fonction du résultat de cette comparaison.

Dans un second mode de mise en oeuvre du procédé selon l'invention, on détourne au moins une partie des gaz sortant de la seconde zone de préchauffage naturel en dehors des cloisons creuses. La partie des gaz détournée en dehors des cloisons creuses ne traverse pas la première zone de préchauffage naturel et ne participe donc pas à la montée en température des cloisons et des blocs carbonés dans la première zone de préchauffage naturel. Ce procédé selon l'invention va également à l'encontre des idées reçues dans le domaine qui concourent à profiter au maximum de l'énergie thermique transportée par les gaz pour réaliser la monté en température des anodes et des cloisons creuses.

Selon un mode de réalisation avantageux de l'invention, la rampe aval comporte, par cloison, une première jambe d'aspiration et une seconde jambe d'aspiration de gaz munies d'un système de vanne, et on installe la première jambe d'aspiration sur un ouvreaux disposé en aval de la première zone de préchauffage naturel et la seconde jambe d'aspiration sur un ouvreau disposés entre la première zone de préchauffage naturel et la seconde zone de préchauffage naturel. On peut alors commander le système de vanne de manière à réguler le débit du flux de gaz traversant la première zone de préchauffage naturel.

Selon un autre mode de réalisation avantageux de l'invention, on retarde le déplacement de la rampe aval par rapport au reste du système de chauffage tournant. Dans ce dernier mode de réalisation, la première zone de préchauffage correspond plus particulièrement à la première chambre en activité du four. Pendant une première partie du cycle, la rampe aval d'aspiration ne sera pas placée en aval de la première zone de préchauffage naturel. L'air sortant ainsi de la seconde zone de préchauffage naturel pendant la première partie du cycle ne traversera donc pas la première zone de préchauffage naturel et ne servira pas à la montée en température des cloisons et anodes. Ce mode de réalisation présente par ailleurs l'avantage que la montée en température des anodes se fait rapidement car les gaz sortant de la seconde zone de préchauffage naturel après déplacement de la rampe d'aspiration ont une température élevée, par rapport notamment à des gaz sortant de la seconde zone de préchauffage naturel en début de cycle. Ce mode de réalisation ne contrevient pas à la sécurité du four car le front de dégazage est assez éloigné de la rampe aval d'aspiration en début de cycle.

Le déplacement de la rampe aval d'aspiration est commandé à partir d'un temps de référence prédéterminé par exemple par calcul ou par expérimentation.

Aussi, chaque ligne de circulation de gaz est régulée individuellement de sorte à permettre un parfait alignement des fronts de dégazage entre les différentes lignes de circulation de gaz et obtenir une meilleure homogénéité de cuisson.

Dans les procédés de l'art antérieur où le principal levier de régulation de la montée en température des anodes dans la zone de préchauffage naturel est le débit d'air soufflé et aspiré, une dispersion des débits entre les différentes lignes de circulation peut entraîner une dispersion des niveaux de montée en température et de cuisson des anodes qui impose de cuire en excès une partie des anodes pour assurer la qualité minimale de l'ensemble des anodes, ce qui conduit ipso facto à une dégradation des performances énergétiques du four. Le procédé selon l'invention permet avantageusement une régulation plus précise de la montée en température dans la première zone de préchauffage naturel et donc une meilleure homogénéité de cuisson. Aussi, la montée en température des anodes et le positionnement du front de dégazage ne dépendant plus directement du débit soufflé ou aspiré, les débits peuvent par exemple être maintenus identiques pour toutes les lignes de circulation des gaz, ce qui permet une meilleure homogénéité de cuisson dans le four.

De préférence, on limite la température des anodes à 250°C dans la première zone de préchauffage naturel de manière à éviter un dégazage à froid des anodes et une avancée trop importante du front de dégazage.

On peut également, selon l'invention, concevoir un procédé de régulation dans lequel la première zone de préchauffage naturel du four comporte un système de chauffage autonome et dans lequel on réalise la montée en température régulée des anodes dans la première zone de préchauffage naturel au moyen de ce système de chauffage autonome. Par système de chauffage autonome on entend que la première zone de préchauffage naturel est découplée du reste du four. Ce système de chauffage autonome peut par exemple comporter des bruleurs.

L'invention concerne également un four de cuisson d'anodes pour la production d'aluminium par électrolyse comprenant :
- des cloisons creuses longitudinales dans chacune desquelles peut circuler avec un certain débit un flux de gaz chauds de cuisson à une certaine température, les cloisons creuses définissant entre elles des alvéoles de réception des anodes à cuire et comportant une pluralité d'ouvreaux,
- un système de chauffage tournant par rapport aux cloisons creuses, qui comporte une rampe amont de plusieurs jambes de soufflage d'air dans les différentes cloisons creuses, une rampe aval de plusieurs jambes d'aspiration de gaz depuis les différentes cloisons creuses et, entre lesdites rampes amont et aval, au moins une rampe de chauffage pourvue d'au moins un brûleur ou au moins un injecteur de combustible par cloison ;
des lignes pour la circulation des flux de gaz dans les cloisons creuses étant formées dans les cloisons creuses entre des jambes de soufflage et des jambes d'aspiration correspondantes;
une zone de préchauffage naturel du four étant définie en aval de la rampe de chauffage sur laquelle les anodes libèrent des matières volatiles combustibles qui brulent dans les cloisons creuses en formant un front de dégazage pour préchauffer les gaz, les cloisons et les anodes, cette zone de préchauffage naturel étant scindée en au moins une première zone de préchauffage naturel située à une première distance de la rampe de chauffage et une seconde zone de préchauffage naturel située à une seconde distance de la rampe de chauffage, la première distance étant plus grande que la seconde distance , et,
caractérisé en ce qu'il est adapté pour la mise en oeuvre du procédé selon l'une des revendications précédentes, et comprend :
- des moyens de mesure de la température dans la zone de préchauffage naturel,
- des moyens d'analyse aptes à comparer cette température à une référence correspondante ;
- des moyens de commande aptes à commander une action pour le refroidissement des gaz traversant la première zone de préchauffage naturel en fonction du résultat de la comparaison effectuée par les moyens d'analyse.

Ce four selon l'invention peut comporter en outre des moyens de refroidissement aptes à refroidir les gaz qui sortent de la seconde zone de préchauffage naturel avant qu'ils traversent la première zone de préchauffage naturel. Ces moyens de refroidissement étant par exemple des ouvreaux aptes à être ouverts ou des manchettes souples insérées dans les ouvreaux et munies d'un système de vanne pour ajuster le pourcentage d'ouverture des ouvreaux.

### DESCRIPTION DES FIGURES

On décrit ci-dessous, à titre d'exemples non limitatifs, plusieurs modes de réalisation possibles de l'invention, en référence aux figures annexées :
La figure 1 est une vue partielle, en perspective, d'un four de cuisson d'anode typique sur lequel peut être mis en oeuvre le procédé selon l'invention;
La figure 2 est une vue de dessus du four de la figure 1;
La figure 3 est une représentation schématique en vue latérale des cloisons du four des figures 1 et 2.
La figure 4 est une représentation schématique détaillée en vue latérale d'une portion des cloisons du four lors d'un exemple de mise en oeuvre manuelle d'un premier mode de réalisation selon l'invention.
La figure 5 est un graphique montrant l'évolution dans le temps de la température des gaz mesurée dans la première zone de préchauffage naturel et dans la seconde zone de préchauffage naturel dans un mode de réalisation selon l'invention.
La figure 6 est un graphique montrant l'évolution dans le temps de la dépression mesurée dans la seconde zone de préchauffage naturel et de l'ouverture du volet d'aspiration de la jambe d'aspiration dans un mode de réalisation selon l'invention.
La figure 7 est une représentation schématique détaillée en vue latérale d'une portion des cloisons du four lors d'un exemple de mise en oeuvre automatique d'un premier mode de réalisation selon l'invention.
La figure 8 est un graphique montrant l'évolution dans le temps de la température des gaz dans les cloisons par rapport à une loi de référence, lorsque la température des gaz est mesurée dans la seconde zone de préchauffage naturel.
La figure 9 est un graphique montrant l'évolution dans le temps de la température des gaz dans les cloisons par rapport à une loi de référence, lorsque la température des gaz est mesurée dans la première zone de préchauffage naturel ou en aval de celle-ci.
La figure 10 est une représentation schématique détaillée en vue latérale d'une portion des cloisons du four lors d'un exemple de mise en oeuvre d'un second mode de réalisation selon l'invention.
La figure 11 est un graphique montrant l'évolution globale de la température des gaz et des anodes dans le four en utilisant le procédé selon l'invention et un procédé classique.

### DESCRIPTION DETAILLEE

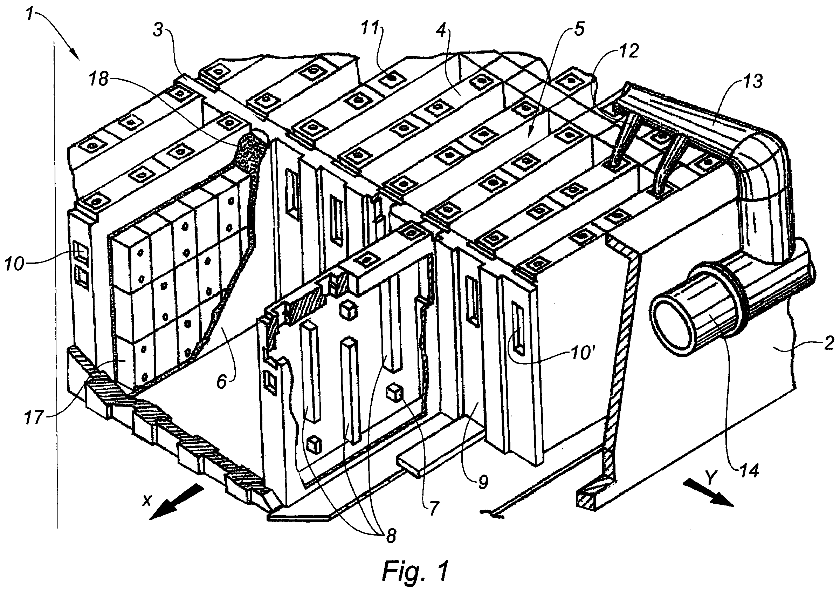

La description détaillée qui suit porte sur l'application de l'invention aux installations comprenant un four à feu tournant à chambres, telles qu'illustrées aux figures 1 à 3. L'invention n'est toutefois pas limitée à ce type de fours. En particulier, l'invention est également applicable aux installations comportant un four sans murs transversaux intermédiaires.

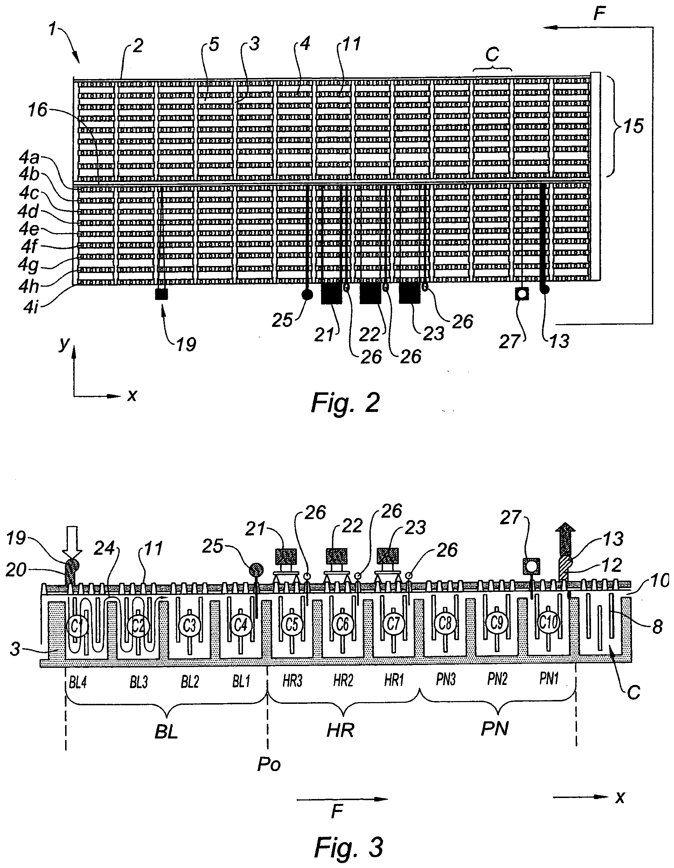

Le four 1 comprend une enceinte 2 calorifugée de forme sensiblement parallélépipédique, par rapport à laquelle on définit une direction longitudinale X et une direction transversale Y. Dans l'enceinte 2 sont disposés des murs transversaux 3 définissant des chambres C successives selon la direction X. Dans chaque chambre C sont prévues des cloisons 4 creuses disposées dans le sens longitudinal, formant entre elles des alvéoles 5 allongées. Chaque chambre C comporte ainsi plusieurs cloisons 4a à 4i, comme illustré sur la figure 2.

Les cloisons 4 comprennent des parois latérales 6 minces généralement séparées par des entretoises 7 et des chicanes 8. Les extrémités des cloisons creuses comportent des ouvertures 10 et sont encastrées dans des échancrures 9 des murs transversaux 3. Ces échancrures 9 sont elles-mêmes munies d'ouvertures 10' situées en regard des ouvertures 10 des cloisons 4, afin de permettre le passage des gaz circulant dans les cloisons 4 d'une chambre C à la chambre suivante. Les cloisons 4 comprennent en outre des ouvreaux 11 ou orifices qui servent notamment à introduire des moyens de chauffage (tels que des injecteurs ou des brûleurs de combustible), des jambes d'aspiration 12 d'une rampe aval d'aspiration 13 raccordée à un conduit principal 14 longeant le four 1, des jambes de soufflage d'air, des capteurs d'appareils de mesure (tels que des thermocouples, des opacimètres), des appareils pour la maintenance etc....

Comme on le voit plus particulièrement sur la figure 2, les chambres C forment une longue travée 15 dans la direction longitudinale, et le four 1 comprend typiquement deux travées parallèles, chacune ayant une longueur de l'ordre d'une centaine de mètres, délimitées par un mur central 16. Dans chaque travée 15, on a donc des lignes longitudinales de cloisons 4.

Dans les alvéoles 5 sont empilés des blocs carbonés 17 crus, c'est-à-dire les anodes à cuire, et les alvéoles 5 sont ensuite remplies d'un matériau granulaire ou pulvérulent (typiquement à base de coke), appelé « poussier » 18, qui entoure ces blocs 17 et les protège pendant leur cuisson.

Le four de cuisson d'anodes comprend également un système de chauffage, qui comporte typiquement : une rampe de soufflage amont 19 de plusieurs jambes de soufflage 20 d'air dans les différentes cloisons 4 d'une chambre C (par les orifices 11), deux ou trois rampes de chauffage 21, 22, 23 composée chacune d'un ou deux brûleurs ou injecteurs de combustible par cloison, et une rampe d'aspiration aval 13 de plusieurs jambes d'aspiration 12 de gaz depuis les différentes cloisons 4 d'une chambre C (depuis les orifices 11).

Comme on le voit sur la figure 3, les différents éléments constitutifs du système de chauffage sont disposés à distance les uns des autres selon la configuration fixe typique suivante : la rampe de soufflage d'air 19 est située en entrée d'une chambre C1 donnée ; la première rampe 21 de brûleurs/injecteurs est disposée au-dessus de la cinquième chambre C5 en aval de la rampe de soufflage d'air 19, la deuxième rampe 22 de brûleurs/injecteurs est disposée au-dessus de la chambre C6 située immédiatement en aval de la première rampe 21 ; la troisième rampe 23 de brûleurs/injecteurs est disposée au-dessus de la chambre C7 située immédiatement en aval de la deuxième rampe 22 ; et la rampe d'aspiration 13 est située en sortie de la troisième chambre C10 en aval de la troisième rampe 23.

Plus généralement, la position relative des différents éléments est toujours la même (à savoir, dans le sens du feu, la rampe de soufflage 19, les rampes de brûleurs/injecteurs 21,22, 23 et la rampe d'aspiration 13). Toutefois, l'espacement (en nombre de chambres) entre des éléments peut varier d'un four à l'autre. C'est ainsi que la première rampe 21 de brûleurs/injecteurs pourrait être positionnée au-dessus de la chambre C4 ou C3. Par ailleurs, la rampe d'aspiration 13 pourrait être située en sortie de la deuxième chambre en aval de la troisième rampe 23. Aussi, le nombre de rampe de brûleurs/injecteurs peut varier typiquement de 2 à 4.

Lors des opérations de cuisson classique connues de l'art antérieur, de l'air est soufflé par les jambes de soufflage 20. Cet air, mélangé au combustible primaire injecté par les rampes de brûleurs/injecteurs 21,22, 23 et au combustible secondaire produit par la cuisson des anodes, circule dans les lignes longitudinales de cloisons 4, de chambre en chambre, en suivant le chemin, ou ligne de circulation, formé par les chicanes 8 et en passant d'une cloison à une autre par les ouvertures 10, jusqu'à être aspiré par les jambes d'aspiration 12. Les jambes d'aspiration comportent des volets d'aspiration dont le pourcentage d'ouverture permet une régulation de la dépression dans les cloisons du four. Le four, et plus particulièrement les cloisons et les alvéoles sont fermés de la manière la plus hermétique possible pour limiter autant que possible les infiltrations d'air froid ou les exfiltrations d'air chaud.

Entre une jambe de soufflage 20 et une jambe d'aspiration 12 correspondante, on a donc une ligne de circulation de gaz 24 globalement longitudinale le long des cloisons 4 successives. Par « globalement longitudinale », on entend que le gaz circule, depuis une jambe de soufflage vers la jambe d'aspiration correspondante, selon la direction X de façon globale, tout en effectuant localement des mouvements verticaux, typiquement en ondulations, comme illustré sur la figure 3. Comme indiqué ci-dessus, le flux gazeux est constitué d'air, du gaz issu de la combustion du combustible primaire liquide ou gazeux injecté, et des matières volatiles dégagées par les blocs carbonés 17 (combustible secondaire). La chaleur produite par la combustion des combustibles primaire et secondaire est transmise aux blocs carbonés 17 contenus dans les alvéoles 5, ce qui entraîne leur cuisson.

Une opération de cuisson de blocs carbonés, pour une chambre C donnée, comprend typiquement le chargement des alvéoles 5 de cette chambre C en blocs carbonés 17 crus, le chauffage de cette chambre C jusqu'à la température de cuisson des blocs carbonés 17 (typiquement de 1100 à 1200 °C), le refroidissement de la chambre C jusqu'à une température qui permette d'enlever les blocs carbonés cuits et le refroidissement de la chambre C jusqu'à la température ambiante.

Le principe du feu tournant consiste à effectuer successivement le cycle de chauffage sur les chambres du four par un déplacement du système de chauffage. Ainsi, une chambre donnée passe successivement par des phases de préchauffage naturel (par les gaz chauds circulant dans les cloisons), de chauffage forcé et de soufflage. La zone de cuisson est formée par l'ensemble des chambres situées entre la rampe de soufflage et la rampe d'aspiration. Sur les figures 2 et 3 le sens du feu est représenté par la flèche F.

On décrit à présent les conditions régnant dans les différentes chambres C du four 1 au niveau desquelles est placé le système de chauffage à un instant donné, en se reportant aux figures 2 et 3.

Les quatre premières chambres C1 à C4 suivant la rampe de soufflage 19 sont des zones dites de soufflage BL, respectivement BL4, BL3, BL2 et BL1. Il y règne une surpression. Les anodes qui y sont placées sont déjà cuites, et subissent un refroidissement par soufflage, ce qui a pour conséquence d'augmenter la température de l'air soufflé, qui servira aux combustions. Les six chambres suivantes C5 à C10, jusqu'à la rampe d'aspiration 13, sont des zones en dépression. Sensiblement à la jonction entre ces deux blocs de chambres se situe le « point zéro » P0, c'est-à-dire un point où la pression dans le four 1 est sensiblement égale à la pression atmosphérique. Le point zéro est situé en amont de la première rampe de chauffage afin d'éviter le rejet des produits de combustion dans le milieu ambiant par exfiltration.

Il est typiquement prévu une rampe 25 de prise de pression - dite rampe de point zéro 25 (PZR) - positionnée de façon fixe par rapport au système de chauffage afin de réguler la pression au point zéro. Dans la réalisation représentée, la rampe de point zéro 25 est située au niveau des ouvreaux 11 de la cloison 4 situés le plus en aval de la dernière chambre C4, BL1 située dans la zone de soufflage. Toutefois, cette rampe de point zéro 25 pourrait être placée en un autre point de la zone de soufflage BL.

Dans la zone en dépression, on trouve successivement, de l'amont vers l'aval :
- une zone de chauffage HR au niveau des chambres C5, C6 et C7 situées sous les trois rampes de chauffage 21, 22, 23, comprenant dans les deux premières chambres C5, C6 une zone de chauffage forcé, respectivement HR3, HR2, puis dans la chambre suivante C7 une zone de préchauffage forcé HR1. La température de l'air préchauffé dans les zones de soufflage BL suffit à créer l'inflammation et la combustion du combustible ;
- une zone de préchauffage naturel PN au niveau des chambres C8, C9 et C10, respectivement PN3, PN2 et PN1. Les gaz chauds issus de la zone de chauffage permettent l'inflammation des matières volatiles combustibles libérées par les blocs carbonés lors de leur préchauffage dans la zone de préchauffage.

La chambre C située juste après la rampe d'aspiration 13 (complètement à droite sur la figure 3), nommée chambre morte, est une chambre prête à recevoir des blocs carbonés crus 17, qui subira donc successivement, lorsque le système de chauffage sera déplacé dans le sens du feu F : un préchauffage naturel (PN1, PN2 puis PN3), un préchauffage forcé (HR1), un chauffage forcé (HR2 puis HR3), puis un soufflage (BL1, BL2, BL3 puis BL4), avant le déchargement des anodes cuites et refroidies.

Le système de chauffage comprend également un dispositif de mesure de la température, qui comporte typiquement au moins un pyromètre ou un thermocouple 26 par rampe de chauffage et par cloison, disposé chacun immédiatement en aval de chaque rampe de chauffage 21, 22, 23.

Il est de plus prévu au moins une rampe de mesure 27 de pression et/ou de température (TPR), disposée entre la dernière rampe de chauffage 23 et la rampe d'aspiration 13, c'est-à-dire dans la zone PN. Dans la réalisation représentée sur les figures 2 et 3, on a une unique rampe TPR permettant de mesurer à la fois la température et la pression. Cette rampe est positionnée au niveau de la même chambre C10 que la rampe d'aspiration 13, c'est-à-dire dans la première chambre de préchauffage naturel PN1, par exemple dans l'ouvreau 11 le plus en amont de cette chambre.

Selon une variante possible de l'invention, la pression et la température peuvent être mesurées en des endroits distincts dans la zone de préchauffage naturel. On a alors une rampe de mesure de la température et une rampe de mesure de la pression distinctes. De préférence, la mesure de la température est effectuée en PN1, tandis que la mesure de pression peut être effectuée en tout point de la zone PN.

Dans toute la description, l'expression « rampe de mesure 27 » ou « TPR » sera employée pour désigner la mesure de la température et de la pression, éventuellement en des endroits distincts, dans la zone PN.

Le procédé de régulation selon l'invention a pour objectif de dissocier le régime de régulation en température des anodes dans une première zone de préchauffage naturel Z1 du régime de régulation en température des anodes dans le reste du four 1 de manière à contrôler le positionnement du front de dégazage et à dissocier le positionnement de ce front de dégazage de la température des gaz et du débit des gaz circulant dans les cloisons 4 en amont de cette première zone de préchauffage naturel Z1. Ainsi, la zone de préchauffage naturel est scindée en deux zones distinctes, c'est-à-dire une première zone de préchauffage naturel Z1 et une seconde zone de préchauffage naturel Z2 avec des régimes différents de régulation en température. La seconde zone de préchauffage naturel Z2 est la partie de la zone de préchauffage naturel PN la plus proche de la zone de chauffage HR et la première zone de préchauffage naturel Z1 est en aval de cette seconde zone de préchauffage naturel Z2.

Dans un premier mode de réalisation selon l'invention, on fait entrer de l'air extérieur dans les cloisons 4 en un point précis du four, entre la première et la seconde zone de préchauffage naturel pour qu'il se mélange au flux de gaz circulant dans les cloisons 4 creuses et refroidisse les gaz.

Un tel mode de réalisation peut avantageusement être mis en oeuvre sur un four 1 existant tel que par exemple décrit ci-dessus, sans nécessitée de modification structurelle particulière.

Le procédé selon l'invention comprend par exemple:
- le réglage du débit D d'air en circulation dans les cloisons 4 sans se soucier de l'incidence de ce réglage sur le positionnement du front de dégazage dans le four 1; ce débit peut par exemple être déterminé de manière à ce que la totalité des combustibles primaire et secondaire puisse être parfaitement brulée ou par ajustement continue en fonction par exemple des mesures d'un opacimètre ou d'un détecteur de monoxyde de carbone; un tel débit peut en outre être majoré de quelques pourcents pour améliorer par exemple le drainage des matières volatiles combustibles des alvéoles vers les cloisons creuses et augmenter la températures des gaz en PN1 pour une meilleure inflammation de ces matières volatiles combustibles ;
- le réglage des lois de montée en température des gaz dans les cloisons 4 du four comme cela est connu des procédés de l'art antérieur;
- la mesure pour chaque cloison 4 de la température à la rampe de mesure 27 et lorsque cette température atteint une valeur de référence donnée, l'ouverture d'un ouvreau 11' disposé en aval de la rampe de mesure, et plus particulièrement de l'ouvreau 11' disposé directement en aval de la rampe de mesure, jusqu'à la fin du cycle en cours.

Lorsque l'ouvreau 11' est ouvert, un flux 30 d'air extérieur, plus froid que les gaz du flux 31 de gaz circulant dans la cloison, s'introduit spontanément dans la cloison 4 du fait que la cloison est en dépression dans la zone de préchauffage naturel PN. Le flux 30 d'air extérieur se mélange alors au flux 31 de gaz en circulation et refroidit ces gaz de sorte que les gaz du flux constitué par addition des flux 30 et 31 et circulant dans la cloison en aval de l'ouvreau 11' ouvert ont une température inférieure aux gaz du flux 31 en amont de l'ouvreau 11' ouvert.

La montée en température des anodes est alors ralentie, voir stoppée entre le moment de l'ouverture de l'ouvreau et la fin du cycle. L'ouverture de l'ouvreau 11' permet donc de contrôler la montée en température des anodes disposées en aval de l'ouvreau et donc de contrôler le positionnement du front de dégazage dans le four 1, et ce, indépendamment de la température et du débit des gaz circulant dans les cloisons en amont de l'ouvreau 11' ouvert.

L'ouverture de l'ouvreau 11' n'interfère avantageusement pas avec les autres paramètres de régulation du four puisque la rampe de mesure 27 est disposée en amont de l'ouvreau 11' ouvert. La rampe de mesure 27 ne détecte donc pas la chute de température des gaz circulant dans les cloisons en aval de l'ouvreau 11' ouvert. Aussi, la rampe de mesure 27 détecte la variation de la dépression due à l'ouverture de l'ouvreau 11' de sorte que le régulateur du four commande une ouverture plus importante du volet d'aspiration de la jambe d'aspiration 12 pour compenser la quantité d'air extérieur s'introduisant dans la cloison par l'ouvreau 11' ouvert et maintenir un niveau de dépression constant dans le four 1 en amont de l'ouvreau ouvert et donc un débit de gaz constant en amont de l'ouvreau 11' ouvert.

L'ouverture de cet ouvreau 11' n'implique pas par ailleurs de modifications des dispositifs de sécurité du four.

La détermination des lois de montée en température des gaz dans les cloisons du four est une tache courante de l'homme du métier des fours à feu tournant. Cet homme du métier peut par ailleurs tenir compte de l'influence de l'ouverture des ouvreaux 11' lors de cette détermination.

Un tel mode de réalisation a été mis en oeuvre pendant quelques mois sur un four à chicanes 1 comprenant 52 chambres, 10 cloisons, 9 alvéoles, 21 anodes par alvéoles, et fonctionnant avec un système de chauffage au gaz. Le système de chauffage de ce four 1 correspond au système de chauffage présenté sur la figure 3 avec 10 chambres actives et 3 rampes de chauffage 21, 22, 23.

Les inventeurs ont choisi de faire fonctionner ce four 1 avec des cycles particulièrement long de 36 heures de sorte à limiter la quantité d'anodes produites par le four et à réduire la quantité de gaz consommée pour la fabrication des anodes.

Etant très difficile et non optimal d'utiliser des cycles aussi longs avec les procédés classiques de l'art antérieur car on ne peut à la fois obtenir une combustion complète des combustibles primaire et secondaire et maintenir le front de dégazage suffisamment éloigné de la rampe d'aspiration pour des raisons de sécurité, les inventeurs ont avantageusement mis en oeuvre le nouveau procédé selon l'invention.

Les inventeurs ont cherché à obtenir un front de dégazage en fin de cycle assez proche de la rampe d'aspiration 13, c'est-à-dire pour qu'il soit sur le point de passer le mur transversal entre la chambre en PN1 et la chambre en PN2 en fin de cycle. Ce positionnement assez proche de la rampe d'aspiration est souhaité car il limite au maximum les risques de dégazage à froid. Il est par ailleurs rendu possible car on est en mesure de contrôler avec précision le positionnement de ce front de dégazage, qui n'est plus dépendant des nombreux aléas de fonctionnement du four qui obligeaient précédemment à maintenir une grande marge de sécurité.

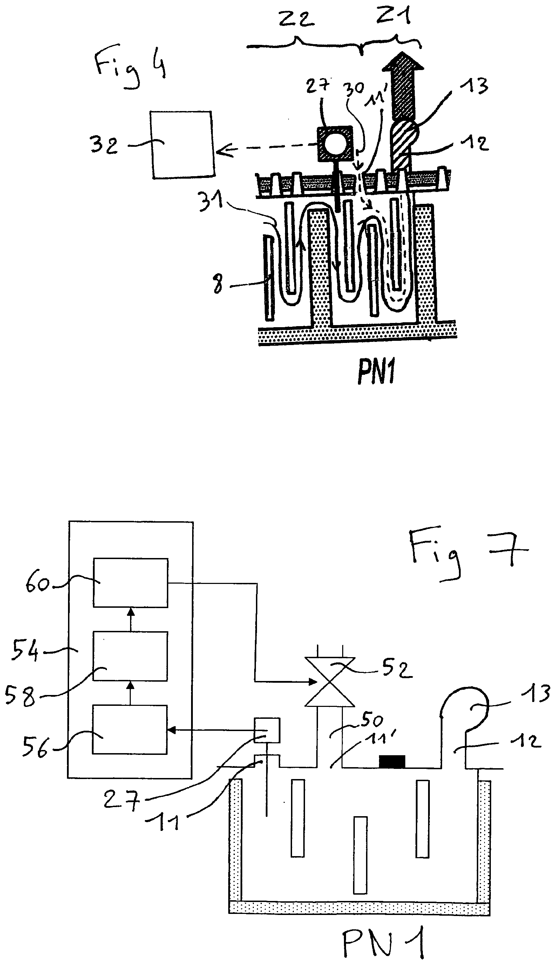

Pour cela, on procède à l'ouverture complète des ouvreaux 11' disposés directement en aval de la rampe de mesure, comme cela est visible sur la figure 4 lorsque la température des gaz mesurés par la rampe de mesure 27 atteint 750°C. La première zone de préchauffage naturel Z1 correspond alors à la zone entre les ouvreaux 11' et la rampe aval d'aspiration 13 tandis que la seconde zone de préchauffage naturel Z2 correspond à la zone de préchauffage naturel en amont des ouvreaux 11'. Après ouverture, les ouvreaux 11' ouverts restent ouverts jusqu'à la fin du cycle. Cette opération est donc très simple et peut être effectuée de manière entièrement manuelle par le personnel opérationnel.

Le personnel opérationnel contrôle sur un écran de contrôle 32 la température mesurée à la rampe de mesure 27 pour chacune des cloisons et lorsque cette température atteint la valeur de référence de 750°C, il ouvre manuellement l'ouvreau 11' de la cloison creuse correspondante. Il procède ainsi pour toutes les cloisons 4. Le procédé selon l'invention ne nécessite alors pour sa mise en oeuvre aucun équipement supplémentaire par rapport à l'équipement existant sur les fours traditionnels.

Avantageusement, dans les cloisons d'extrémités dans lesquels la quantité de combustible secondaire relâchée est moitié moindre que dans les autres cloisons entourées de deux alvéoles, cette valeur de référence pour l'ouverture des ouvreaux est rehaussée à 850°C.

Après ouverture, comme visible sur la figure 4, un flux 30 d'air extérieur s'introduit dans la cloison 4 creuse et pour s'additionner et se mélanger au flux 31 de gaz provenant de la seconde zone de préchauffage naturel Z2 pour circuler dans la première zone de préchauffage naturel Z1.

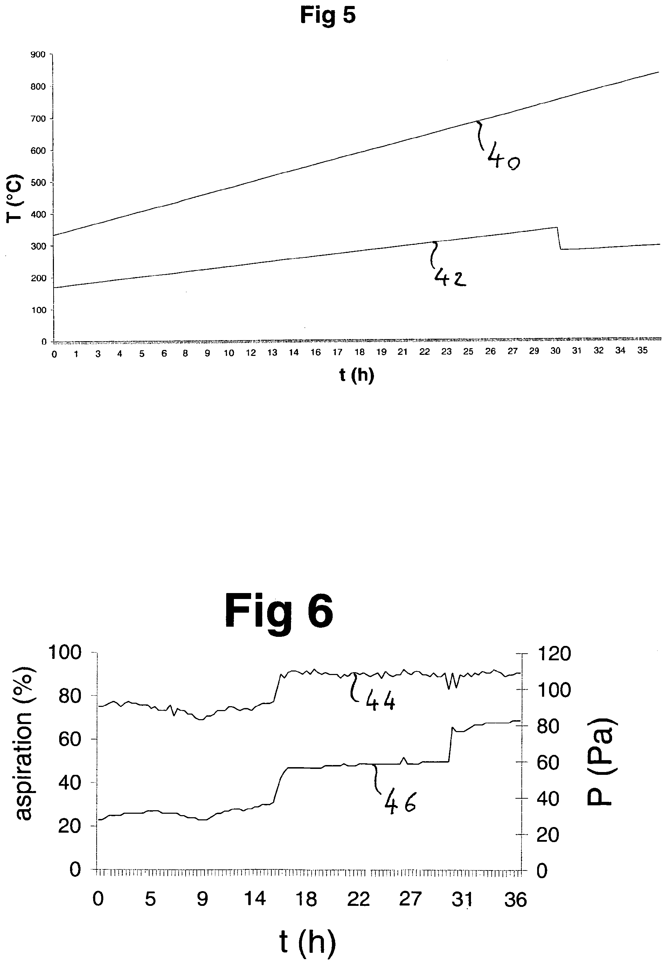

La figure 5, montre conjointement une courbe 40 représentant l'évolution dans le temps (t en heure) de la température (T en °C) des gaz mesurée à la rampe de mesure 27 et une courbe 42 représentant l'évolution dans le temps de la température des gaz mesurée à l'intérieur de la rampe aval d'aspiration 13 pendant un cycle. La température des gaz au niveau de la rampe de mesure 27, et par conséquent dans la seconde zone de préchauffage naturel Z2, poursuit une montée en température régulière tout au long du cycle tandis que la température des gaz au niveau de la rampe aval d'aspiration 13, et par conséquent dans la première zone de préchauffage naturel Z1, diminue subitement lorsque la température mesurée à la rampe de mesure atteint la valeur référence de 750°C, c'est-à-dire lorsque l'ouvreau 11' est ouvert. La première zone de préchauffage naturel Z1 présente un régime propre de montée en température comportant une rupture dans la régularité de la montée en température au moment de l'ouverture de l'ouvreau 11'.

Par ailleurs, la figure 6 montre une courbe 44 représentant la mesure de la dépression (pression P en Pa) dans le temps à la rampe de mesure 27 conjointement à une courbe 46 représentant le pourcentage d'ouverture (%) dans le temps du volet d'aspiration de la jambe d'aspiration 12. On remarque qu'au moment de l'ouverture de l'ouvreau 11' (à environ 30 heures), la dépression reste stable et continue au niveau de la rampe de mesure 27 comme cela est recherché par le système de régulation de sorte que le débit du flux de gaz 31 traversant la seconde zone de préchauffage naturel, et donc sortant de la seconde zone de préchauffage naturel Z2, reste globalement stable et continu. Par contre, le débit du flux de gaz traversant la première zone de préchauffage naturel Z1 augmente fortement après ouverture de l'ouvreau 11', comme montré par la courbe 46. Ceci s'explique par l'addition du débit du flux de gaz 31 sortant de la seconde zone de préchauffage naturel Z2 et du débit du flux d'air extérieur 30 entrant par l'ouvreau 11' ouvert.

On dissocie ainsi le contrôle du débit du flux des gaz et la température des gaz traversant ladite première zone de préchauffage naturel Z1, du contrôle du débit du flux des gaz et de la température des gaz sortant de la seconde zone de préchauffage naturel Z2. On régule alors la montée en température des cloisons et des blocs carbonés dans la première zone de préchauffage naturel Z1 en régulant l'entrée d'air extérieur. Dans l'exemple ci-dessus, on régule cette entrée d'air extérieure en jouant sur le moment ou l'on ouvre l'ouvreau 11'.

Lorsque la montée en température des gaz circulant dans une cloison 4 est en retard par rapport à la montée en température des gaz dans les autres cloisons 4, l'ouverture de l'ouvreau 11' de cette cloison est effectuée en retard par rapport aux autres ouvreaux 11' de sorte que la montée en température de cette cloison dans la première zone de préchauffage naturel Z1 rattrape son retard de montée en température par rapport aux autres cloisons de sorte que les fronts de dégazage s'alignent de façon systématique. Cet alignement des fronts de dégazage augmente l'homogénéité des températures dans le four et améliore fortement le rendement énergétique du four 1.

Les inventeurs ont ainsi constaté, pour le fonctionnement du four avec des cycles de 36 heures et une ouverture des ouvreaux 11' à la température de référence de 750°C à la rampe de mesure 27, que l'ouverture intervient en moyenne 6 heures avant la fin du cycle.

D'autres expérimentations sur le même four, avec des cycles de respectivement 28 heures et 26 heures et une ouverture des ouvreaux 11' à la température de référence de 750°C à la rampe de mesure 27, ont permis de constater que l'ouverture intervient à respectivement 2 heures et 4 heures de la fin du cycle.

Le procédé selon l'invention est donc applicable pour toute durée de cycle.

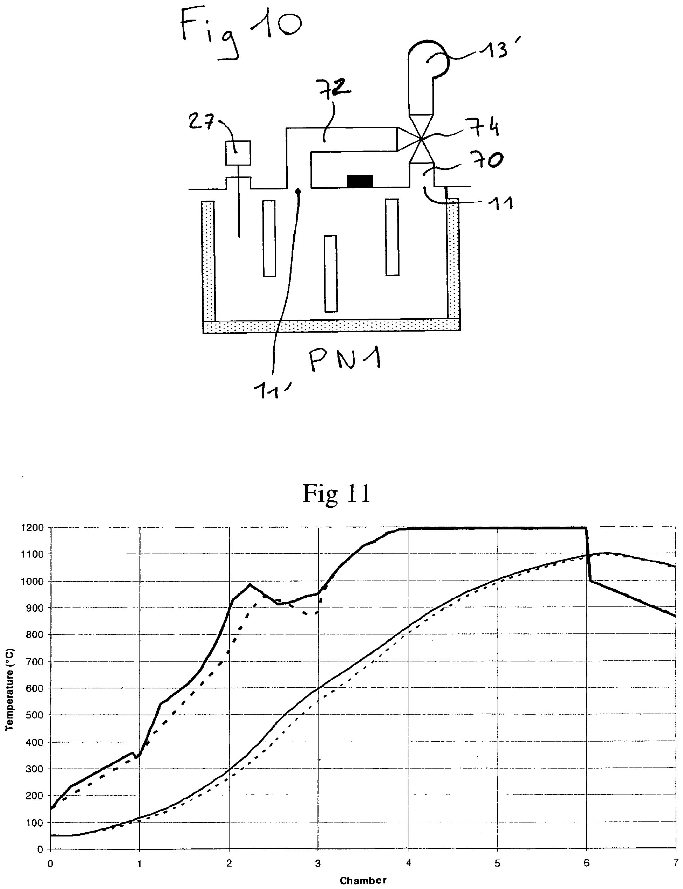

La figure 11 montre un graphique permettant de comparer la montée en température des gaz (courbes supérieures) et des anodes (courbes inférieures) de façon globale dans les chambres d'un four pour la cuisson d'anodes en utilisant le procédé selon l'invention avec ouverture d'ouvreaux (traits pleins) et en utilisant un procédé classique (traits en pointillés). Les chambres 1, 2 et 3 sont en préchauffage naturel, les chambres 4, 5 et 6 sont en chauffage et la chambre 7 est en refroidissement. On observe que la montée en température des anodes dans la zone de préchauffage naturel est plus rapide avec le procédé selon l'invention du fait d'une meilleure combustion des matières volatiles combustibles dans les chambres 2 et 3 qui augmente significativement la température des gaz traversant ces cloisons. On observe également une maîtrise de la température des gaz dans la première chambre du fait de l'ouverture des ouvreaux en utilisant le procédé selon l'invention.

Le gradient de montée en température des anodes est très important, généralement supérieur à 5°C/h, plus généralement supérieur à 7°C/h et pouvant atteindre 17°C/h. Cet important gradient de montée en température des anodes, favorisé par le procédé selon l'invention du fait qu'il est possible de contrôler le positionnement du front de dégazage et donc de faire fonctionner le four avec une dépression importante, permet une accélération de la cuisson des anodes et donc une augmentation de la productivité des fours. A noter également que le gradient de montée en température des anodes est d'autant plus grand dans la zone de température où se produit le dégazage que la température des anodes peut avoir été maintenue à une température assez faible, par exemple de l'ordre de 200-220°C, inférieure à la température de dégazage lors du cycle précédent, par exemple par ouverture des ouvreaux. Un tel important gradient de température favorise la combustion des matières volatiles combustibles et évite les dégazages à froids.

Les valeurs indiquées ci-dessus sont données à titre indicatif et peuvent varier en fonction des fours, des critères de régulation recherchés, des constituants de l'anode, etc. comme cela est connu dans le domaine des fours à feu tournant. Egalement, l'ouvreau à ouvrir et donc le positionnement de la limite entre la première zone de préchauffage naturel et la seconde zone de préchauffage naturel peut dépendre des critères de régulation recherchés, notamment en terme de positionnement du front de dégazage.

La mise en oeuvre du procédé selon l'invention pendant ces quelques mois a donc permis de constater
- l'absence de fumées d'imbrulés au moyen d'un opacimètre et par observation visuelle;
- l'absence de dépôts d'imbrulés ou de chrysène de brai ;
- une forte réduction du collage du poussier ;
- une absence d'agglomérat dans le poussier ;
- une meilleure combustion qui permet d'atteindre des températures de cuisson d'anode élevée de l'ordre de 1145°C (mesuré avec un thermocouple long de 1,45 m) en réduisant la consommation de combustible primaire ;
- un alignement reproductible des fronts de dégazage dans les différentes cloisons ;
- une température de dégazage dans les cloisons creuses atteignant des valeurs de l'ordre de 1000°C.

La quantité de gaz à gérer par le centre de captation et de traitement des gaz augmente légèrement, de l'ordre de 10% environ lorsque pour un fonctionnement avec des cycles de 36 heures, la température de référence pour l'ouverture des ouvreaux 11' est atteinte environ 6 heures avant la fin du cycle. Cet effet négatif est largement contrebalancé par les multiples avantages du procédé selon l'invention évoqués ci-dessus.

Les avantages du procédé de régulation selon l'invention découlent du fait que l'on peut régler le niveau de dépression dans le four, et donc le débit d'air circulant dans les cloisons sans se soucier du positionnement du front de dégazage qui est régulé de façon indépendante. On peut ainsi faire fonctionner le four avec un niveau de dépression élevé, donc un débit élevé, et par conséquent améliorer l'aspiration dans les cloisons du combustible secondaire relâché par les anodes lors de la montée en température de l'anode, éviter les fumées d'imbrulés, et améliorer la combustion globale de par un apport important d'oxygène et une inflammation instantanée par les gaz chauds.

Il est également préférable, comme dans les procédés de l'art antérieur, de limiter autant que possible les infiltrations et exfiltrations en soignant le caractère hermétique des cloisons et alvéoles sur l'ensemble du four, par exemple en recouvrant les cloisons et alvéoles d'une bâche pour optimiser le rendement énergétique du four.

De nombreuses variantes du procédé selon l'invention peuvent être dérivées de l'exemple exposé ci-dessus.

Le moment d'ouverture de l'ouvreau peut par exemple être déterminé à partir d'une température autre que la température mesurée à la rampe de mesure 27, par exemple à partir d'une température prise en aval de l'ouvreau 11' telle que la température des gaz entrant dans les jambes d'aspiration 12 ou d'une température mesurée dans les alvéoles 5 à proximité des anodes 17.

Aussi, le personnel opérationnel peut avantageusement être assisté dans la détermination du moment d'ouverture de l'ouvreau 11'. A cet effet, le procédé selon l'invention peut comporter :
- un enregistrement continu de la température mesurée;
- la comparaison en continu de la température enregistrée avec une valeur de référence ;
- l'émission d'un signal si la comparaison entre la température enregistrée et la valeur de référence correspondante répond à un critère prédéfini (par exemple un franchissement de seuil). Le signal est alors par exemple un signal d'alerte sonore ou lumineux en vue de provoquer une action manuelle d'ouverture d'un ouvreau 11'.

L'ouverture des ouvreaux 11' peut encore être seulement partielle en définissant un pourcentage d'ouverture de l'ouvreau de manière à réguler. plus précisément la quantité d'air extérieur entrant dans les cloisons.

Il est par ailleurs possible de munir les ouvreaux 11' de systèmes de vanne ou encore les cloisons des fours de systèmes d'entrée d'air spécifiques conjointement aux ouvreaux existants, lesquels systèmes de vanne ou systèmes d'entrée d'air étant par exemple adaptés pour pouvoir être maniés plus facilement que de simples ouvreaux 11 ou adaptés pour permettre une ouverture partielle des ouvreaux ou une entrée d'air régulée.

Le premier mode de réalisation selon l'invention exposé ci-dessus peut par ailleurs être mis en oeuvre de manière automatisée.

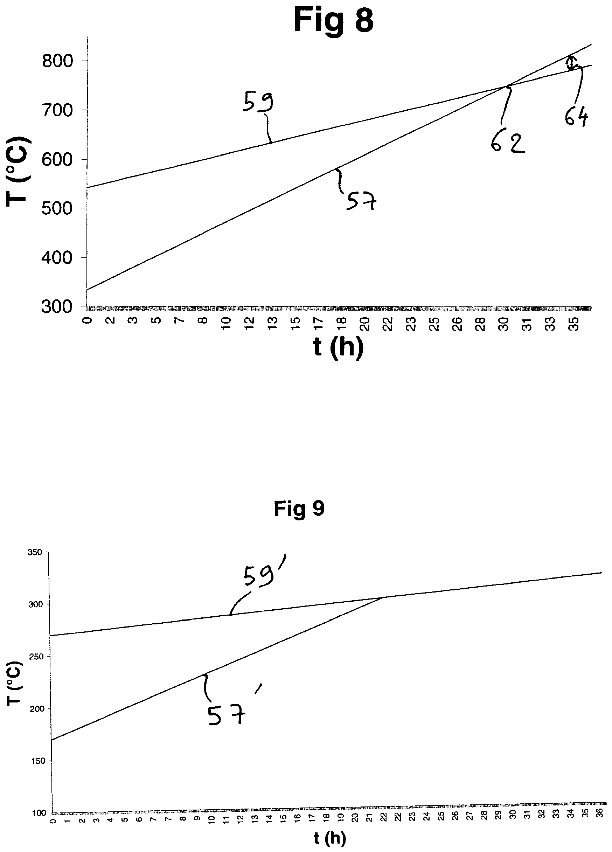

Le procédé selon l'invention comprend par exemple :
- le réglage du débit D d'air en circulation dans les cloisons 4 sans se soucier de l'incidence de ce réglage sur le positionnement du front de dégazage dans le four ;
- le réglage des lois de montée en température des gaz dans les cloisons du four comme cela est connu dans les procédés de l'art antérieur;
- la mise en place d'une manchette souple 50 munie d'un système de vanne 52 à ouverture proportionnelle automatisée, par exemple une électrovanne, sur l'ouvreau 11' de chaque cloison 4 disposé directement en aval de l'ouvreau 11 accueillant la rampe de mesure 27, comme cela est montré sur la figure 7; les manchettes flexibles 50 sont par exemple portées par une rampe particulière non représentée qui s'étend transversalement aux cloisons ;
- la mesure et l'enregistrement en continue pour chaque cloison de la température mesurée à la rampe de mesure 27 dans une mémoire 56 d'une unité de régulation 54, comme représenté par la courbe 57 de la figure 8;
- la comparaison en continue dans un comparateur 58 ou moyen d'analyse de l'unité de régulation 54 de ladite température mesurée et enregistrée par rapport à une valeur de référence ; cette valeur de référence variant par exemple dans le temps de sorte que cette valeur de référence se présente alors sous la forme d'une courbe de température de référence en fonction du temps, comme représenté par la courbe 59 sur la figure 8;
- le déclenchement ou non d'une action par une unité de décision et de commande 60 de l'unité de régulation en fonction de cette comparaison; L'unité de décision et de commande déclenche par exemple cette action lorsque par exemple la température mesurée et enregistrée 57 croise et passe au dessus de la courbe 59 de température de référence en fonction du temps (point 62 sur la figure 8); l'action déclenchée est par exemple une ouverture automatique du système de vanne 52, cette ouverture automatique pouvant être partielle avec un pourcentage d'ouverture fonction par exemple de la valeur de l'écart (représenté sur la figure 8 par la double flèche 64 pour un instant t donné) entre la température mesurée à la rampe de mesure 27 et la valeur de la courbe 59 de température de référence; le pourcentage d'ouverture du système de vanne peut alors varier de façon continue et automatique.

L'ouverture des ouvreaux se fait donc avantageusement de façon graduelle de sorte que l'augmentation du débit aspiré par la rampe d'aspiration aval 13 qui permet de maintenir sensiblement inchangé le niveau de dépression dans les cloisons creuses de la seconde zone de préchauffage naturel se fait également de manière graduelle. L'incidence de cette variation de débit aspiré sur le fonctionnement du centre de captation et de traitement des gaz est alors limitée.

De nombreuses variantes de ce procédé de régulation automatisé peuvent être mises en oeuvre dans le cadre de l'invention, par exemple :
- la manchette souple 50 munie d'un système de vanne 52 à ouverture proportionnelle peut être remplacée par un dispositif de type vérin hydraulique adapté pour soulever le couvercle de l'ouvreau 11' pour ouvrir partiellement ou complètement l'ouvreau 11', le dispositif pouvant être commandé par l'unité de régulation 54;
- la mesure de température servant à la comparaison et à la commande de l'ouverture de l'ouvreau 11' peut avantageusement être effectuée en aval de l'ouvreau 11' ouvrable de sorte à contrôler de façon directe l'incidence de l'ouverture de l'ouvreau 11' sur la température des gaz dans la première zone de préchauffage naturel Z1 et donc sur la montée en température des anodes dans cette première zone de préchauffage naturel Z1; cette température peut être mesurée au moyen d'un capteur de température installé sur le four spécialement à cet effet ou au moyen d'un capteur de température actuellement habituellement présent au niveau de la jambe d'aspiration 12; comme représenté sur la figure 9, la courbe de température mesurée dans la jambe d'aspiration et enregistrée 57' doit alors avantageusement suivre la courbe de température de référence 59' après leur croisement, le pourcentage d'ouverture de l'ouvreau 11' étant calculé par exemple au moyen d'un régulateur PID ; la courbe de température mesurée dans la jambe d'aspiration et enregistrée peut également avantageusement suivre tout au long du cycle une courbe de température de référence spécifique ;

- la température est mesurée en au moins deux points distincts de la cloison (par exemple en aval et en amont de l'ouvreau 11'), et chacune des mesures est comparée à une valeur de référence correspondante distincte de sorte que deux comparaisons pondèrent l'action à enclencher, ce qui permet encore d'améliorer la précision de la régulation.
- des paramètres tels que le débit d'aspiration, la température de l'air extérieur, l'alignement du front de dégazage... peuvent également être pris en compte pour déterminer la valeur de référence servant à la comparaison.

Les différentes caractéristiques exposées ci-dessus indépendamment pour le mode manuel et pour le mode automatisé peuvent être combinées de manière différente sans sortir du cadre de la présente invention.

Aussi, comme on a pu l'observer lors de la mise en oeuvre du procédé de régulation manuel pendant quelques mois, l'ouverture des ouvreaux intervient à des intervalles de temps relativement réguliers dans le cycle de sorte qu'il est possible de commander l'ouverture des ouvreaux 11' sur la base de l'avancement temporel du cycle de cuisson. Aussi, il aurait été possible de réguler le four décrit ci-dessus en fonctionnement avec des cycles de 36 heures en commandant, 6 heures avant la fin du cycle de cuisson, l'ouverture des ouvreaux 11'.

Dans un second mode de mise en oeuvre du procédé selon l'invention, on détourne au moins une partie des gaz, et donc du flux de gaz, sortant de la seconde zone de préchauffage naturel Z2 en dehors des cloisons 4 creuses de sorte que la partie des gaz détournée en dehors des cloisons creuses ne traverse pas la première zone de préchauffage naturel Z1 et ne participe donc pas à la montée en température des cloisons 4 et des blocs carbonés 17 dans la première zone de préchauffage naturel Z1.

Selon un mode de réalisation avantageux de l'invention montré de manière schématique sur la figure 10, la rampe aval d'aspiration 13' comporte, pour chaque cloison, une première jambe d'aspiration 70 et une seconde jambe d'aspiration 72 et un système de vanne 74. La première jambe d'aspiration 70 est installée de façon habituelle sur un ouvreau 11 disposé en aval de la première zone de préchauffage naturel Z1 et la seconde jambe d'aspiration 72 est installée sur un ouvreau 11' disposé entre la première zone de préchauffage naturel Z1 et la seconde zone de préchauffage naturel Z2. Dans l'exemple de la figure 10, la séparation entre la première zone de préchauffage naturel Z1 et la seconde zone de préchauffage naturel Z2 est en PN1 sur l'ouvreau 11' directement en aval de la rampe de mesure 27. On peut alors commander le système de vanne 74 de manière à réguler le débit de gaz traversant la première zone de préchauffage naturel Z1 et aspiré par la première jambe d'aspiration 70, et le débit de gaz sortant des cloisons creuses par l'ouvreau 11' et aspiré par la seconde jambe d'aspiration 72.

Un exemple de mise en oeuvre du procédé selon l'invention consiste par exemple à maintenir tout au long du cycle un niveau d'ouverture constant prédéterminé entre la première jambe d'aspiration 70 et la seconde jambe d'aspiration 72 de sorte que les gaz aspirés par la seconde jambe d'aspiration 72 tout au long du cycle ne participent pas à la montée en température des anodes 17 dans la première zone de préchauffage naturel Z1.

Le système de vanne 74 peut également, comme présenté précédemment en référence au premier mode de réalisation, être commandé par une unité de régulation par exemple à partir d'une comparaison entre une température mesurée et une température de référence, ou à partir d'une programmation temporelle.

La totalité des gaz sortant de la seconde zone de préchauffage naturel Z2 peut par exemple être aspirée par la première jambe d'aspiration 70 en début de cycle puis le système de vanne 74 commandé pour modifier cette répartition des gaz aspirés par la première et la seconde jambe d'aspiration en fonction de la montée en température des gaz mesurée.

Dans un mode de réalisation particulier, la totalité des gaz sortant de la seconde zone de préchauffage naturel Z2 est aspirée par la seconde jambe d'aspiration 72 en début de cycle puis la totalité des gaz sortant de la seconde zone de préchauffage naturel Z2 est aspirée par la première jambe d'aspiration 70. Un tel mode de réalisation particulier présente l'avantage de pouvoir être mis en oeuvre sur un four connu, c'est-à-dire avec une rampe d'aspiration comportant une unique jambe d'aspiration. Pour cela, on ne déplace pas la rampe aval d'aspiration avec le reste du système de chauffage tournant à la fin d'un cycle de cuisson mais on retarde ce déplacement de la rampe aval d'aspiration. Ainsi, en début de cycle, avant déplacement de la rampe aval d'aspiration, l'unique jambe d'aspiration correspond à la seconde jambe d'aspiration à travers laquelle passe la totalité des gaz sortant de la seconde zone de préchauffage naturel Z2, puis, en cours de cycle, après déplacement de la rampe d'aspiration, l'unique jambe d'aspiration correspond à la première jambe d'aspiration à travers laquelle passe la totalité des gaz sortant de la seconde zone de préchauffage naturel. Le déplacement de la rampe aval d'aspiration est par exemple commandé à partir d'un temps de référence prédéterminé par exemple par calcul ou par expérimentation.

## Revendications

1. Procédé de régulation d'un four (1) de cuisson d'anodes en carbone (17) pour la production d'aluminium par électrolyse, le four comprenant :
- des cloisons (4) creuses longitudinales dans chacune desquelles peut circuler avec un certain débit un flux de gaz chauds de cuisson à une certaine température, les cloisons creuses définissant entre elles des alvéoles (5) de réception des anodes à cuire et comprenant une pluralité d'ouvreaux,
- et un système de chauffage tournant par rapport aux cloisons creuses, qui comporte une rampe amont (19) de plusieurs jambes de soufflage (20) d'air dans les différentes cloisons (4) creuses, une rampe aval (13) de plusieurs jambes d'aspiration (12) de gaz depuis les différentes cloisons (4) creuses et, entre lesdites rampes amont (19) et aval (13), au moins une rampe de chauffage (21, 22, 23) pourvue d'au moins un brûleur ou au moins un injecteur de combustible par cloison ;
des lignes pour la circulation des flux de gaz (24) dans les cloisons (4) creuses étant formées dans les cloisons (4) creuses entre les jambes de soufflage (20) et les jambes d'aspiration (12) correspondantes;
le procédé comprenant une phase de préchauffage naturel des cloisons et des anodes au cours de laquelle les anodes libèrent des matières volatiles combustibles qui brulent dans les cloisons creuses en formant un front de dégazage pour préchauffer les gaz, les cloisons et les anodes, cette phase de préchauffage naturel s'effectuant dans une zone de préchauffage naturel du four en aval de la rampe de chauffage,
**caractérisé en ce que** la zone de préchauffage naturel est scindée en au moins une première zone de préchauffage naturel (Z1) située à une première distance de la rampe de chauffage et une seconde zone de préchauffage naturel (Z2) située à une seconde distance de la rampe de chauffage, la première distance étant plus grande que la seconde distance ;
et dans lequel on modifie les flux de gaz circulant dans les cloisons creuses de sorte à contrôler les flux de gaz (30,31) traversant la première zone de préchauffage naturel (Z1) à partir des flux de gaz (31) sortant de la seconde zone de préchauffage naturel (Z2) pour réguler la montée en température des cloisons et des anodes dans la première zone de préchauffage naturel (Z1) et contrôler le positionnement du front de dégazage.

2. Procédé selon la revendication 1, dans lequel on refroidi les gaz (31) qui sortent de la seconde zone de préchauffage naturel avant qu'ils traversent la première zone de préchauffage naturel (Z1).

3. Procédé selon l'une des revendications précédentes, dans lequel on introduit dans les cloisons de l'air extérieur (30) venant de l'extérieur des cloisons (4) entre la première et la seconde zone de préchauffage naturel.

4. Procédé selon l'une des revendications précédentes, dans lequel on ouvre en tout ou partie les ouvreaux (11') disposés entre la première et la seconde zone de préchauffage naturel pour refroidir les gaz (31) sortant de la seconde zone de préchauffage naturel (Z2) par entrée d'air extérieur.

5. Procédé selon la revendication 3 ou la revendication 4, dans lequel on augmente le débit de gaz aspiré par les jambes d'aspiration pour maintenir le débit du flux de gaz sortant de la seconde zone de préchauffage naturel lors de l'introduction d'air ou de l'ouverture des ouvreaux.

6. Procédé selon l'une des revendications 4 et 5, dans lequel les ouvreaux disposés entre la première zone de préchauffage naturel (Z1) et la seconde zone de préchauffage naturel (Z2) sont munis d'un système de vanne (52) et dans lequel on actionne le système de vanne pour ouvrir les ouvreaux (11').

7. Procédé selon l'une des revendications 4 à 6, dans lequel on fait varier l'ouverture des ouvreaux (11') dans le temps.

8. Procédé selon l'une des revendications précédentes comprenant :
a) pour chaque ligne, la mesure de la température en au moins un point donné de la zone de préchauffage naturel;
b) la comparaison de la température mesurée à une référence correspondante ;
c) la commande d'une action pour le refroidissement des gaz sortant de la seconde zone de préchauffage naturel (Z2) avant de traverser la première zone de préchauffage naturel (Z1) en fonction du résultat de la comparaison effectuée à l'étape b).

9. Procédé selon la revendication 8, dans lequel la température est mesurée dans la première zone de préchauffage naturel (Z1) et/ou dans la seconde zone de préchauffage naturel (Z2).

10. Procédé selon l'une des revendications 8 et 9 et l'une des revendications 4 à 6, dans lequel le pourcentage d'ouverture des ouvreaux (11') est fonction du résultat de la comparaison effectuée à l'étape b).

11. Procédé selon l'une des revendications 6 à 8, dans lequel la référence (59,59') pour la comparaison effectuée à l'étape b) est une loi exprimant la température en fonction du temps.

12. Procédé selon l'une des revendications 1 à 7, comprenant la commande d'une action pour le refroidissement des gaz qui sortent de la seconde zone de préchauffage naturel (Z2) avant de traverser la première zone de préchauffage naturel (Z1) en fonction du temps.

13. Procédé selon l'une des revendications précédentes, dans lequel on installe sur des ouvreaux (11') du four une pluralité de manchettes souples (50) munies d'un système de vanne (52) pour l'ouverture et la fermeture des ouvreaux (11').

14. Procédé selon la revendication 1, dans lequel on détourne au moins une partie du flux de gaz sortant de la seconde zone de préchauffage naturel (Z2) en dehors des cloisons (4) creuses.

15. Procédé selon la revendication 14, dans lequel la rampe aval comporte, par cloison (4), une première jambe d'aspiration (70) et une seconde jambe d'aspiration (72) de gaz munies d'un système de vanne (74), et dans lequel on installe la première jambe d'aspiration (70) sur un ouvreau (11) disposé en aval de la première zone de préchauffage naturel (Z1) et la seconde jambe d'aspiration (72) sur un ouvreau (11') disposé entre la première zone de préchauffage naturel (Z1) et la seconde zone de préchauffage naturel (Z2).

16. Procédé selon la revendication 15, dans lequel on commande le système de vanne (74) de manière à réguler le débit du flux de gaz traversant la première zone de préchauffage naturel (Z1).

17. Procédé selon la revendication 14, dans lequel on retarde le déplacement de la rampe d'aspiration aval par rapport au reste du système de chauffage tournant.

18. Procédé selon l'une des revendications précédentes, mis en oeuvre sur un four avec des cloisons sans chicanes.

19. Procédé selon l'une des revendications précédentes, mis en oeuvre sur un four fonctionnant avec des cycles longs supérieurs à 33 heures:

20. Four (1) de cuisson d'anodes en carbone (17) pour la production d'aluminium par électrolyse comprenant :
- des cloisons (4) creuses longitudinales dans chacune desquelles peut circuler avec un certain débit un flux de gaz chauds de cuisson à une certaine température, les cloisons creuses définissant entre elles des alvéoles (5) de réception des anodes à cuire et comportant une pluralité d'ouvreaux (11, 11'),
- un système de chauffage tournant par rapport aux cloisons creuses, qui comporte une rampe amont (19) de plusieurs jambes de soufflage (20) d'air dans les différentes cloisons (4) creuses, une rampe aval (13) de plusieurs jambes d'aspiration (12) de gaz depuis les différentes cloisons (4) creuses et, entre lesdites rampes amont (19) et aval (13), au moins une rampe de chauffage (21, 22, 23) pourvue d'au moins un brûleur ou au moins un injecteur de combustible par cloison ;
des lignes pour la circulation des flux de gaz (24) dans les cloisons (4) creuses étant formées dans les cloisons (4) creuses entre des jambes de soufflage (20) et des jambes d'aspiration (12) correspondantes;
une zone de préchauffage naturel du four étant définie en aval de la rampe de chauffage sur laquelle les anodes libèrent des matières volatiles combustibles qui brulent dans les cloisons en formant un front de dégazage pour préchauffer les gaz, les cloisons et les anodes, cette zone de préchauffage naturel étant scindée en au moins une première zone de préchauffage naturel (Z1) située à une première distance de la rampe de chauffage et une seconde zone de préchauffage naturel (Z2) située à une seconde distance de la rampe de chauffage, la première distance étant plus grande que la seconde distance, et,
**caractérisé en ce qu'**il est adapté pour la mise en oeuvre du procédé selon l'une des revendications précédentes et comprend :
- des moyens de mesure (27,56) de la température dans la zone de préchauffage naturel (Z1,Z2),
- des moyens d'analyse (58) aptes à comparer cette température à une référence correspondante ;
- des moyens de commande (60) aptes à commander une action pour le refroidissement des gaz traversant la première zone de préchauffage naturel (Z1) en fonction du résultat de la comparaison effectuée par les moyens d'analyse (58) ;
- des moyens de refroidissement aptes à refroidir les gaz qui sortent de la seconde zone de préchauffage naturel (Z2) avant qu'ils traversent la première zone de préchauffage naturel (Z1), les moyens de refroidissement comprenant des ouvreaux aptes à être ouverts ou des manchettes souples (50) insérées dans les ouvreaux (11') et munies d'un système de vanne (52) pour ajuster le pourcentage d'ouverture des ouvreaux (11').

## Patentansprüche

1. Verfahren zur Einstellung eines Ofens (1) zum Brennen von Kohlenstoffanoden (17) für die Erzeugung von Aluminium durch Elektrolyse, wobei der Ofen umfasst:
- längsverlaufende hohle Trennwände (4), in denen jeweils ein Strom heißer Brenngase mit einem bestimmten Durchsatz bei einer bestimmten Temperatur zirkulieren kann, wobei die hohlen Trennwände zwischen sich Zellen (5) zur Aufnahme der zu brennenden Anoden definieren und eine Vielzahl von Arbeitsöffnungen aufweisen,
- und ein sich gegenüber den hohlen Trennwänden drehendes Heizsystem, welches eine stromaufwärtige Rampe (19) mit mehreren Blasstutzen (20) zum Einblasen von Luft in die einzelnen hohlen Trennwände (4), eine stromabwärtige Rampe (13) mit mehreren Saugstutzen (12) zum Ansaugen von Luft aus den einzelnen hohlen Trennwänden (4) und zwischen der stromaufwärtigen (19) und der stromabwärtigen Rampe (13) mindestens eine Heizrampe (21, 22, 23) mit mindestens einem Brenner oder mindestens einer Brennstoffeinspritzdüse pro Wand aufweist;
wobei in den hohlen Trennwänden (4) zwischen den Blasstutzen (20) und den entsprechenden Saugstutzen (12) Leitungen für die Zirkulation der Gasströme (24) in den hohlen Trennwänden (4) ausgebildet sind;
wobei das Verfahren eine natürliche Vorheizphase zum Vorheizen der Trennwände und Anoden umfasst, in deren Verlauf die Anoden brennbare flüchtige Bestandteile freisetzen, die in den hohlen Trennwänden verbrennen und dabei eine Entgasungsfront zum Vorheizen der Gase, Trennwände und Anoden bilden, wobei diese natürliche Vorheizphase in einer natürlichen Vorheizzone des Ofens stromabwärts der Heizrampe erfolgt,
**dadurch gekennzeichnet, dass** die natürliche Vorheizzone in mindestens eine erste natürliche Vorheizzone (Z1), welche in einem ersten Abstand zur Heizrampe liegt, und eine zweite natürliche Vorheizzone (Z2), welche in einem zweiten Abstand zur Heizrampe liegt, aufgeteilt ist, wobei der erste Abstand größer ist als der zweite Abstand;
und bei dem die in den hohlen Trennwänden zirkulierenden Gasströme so geändert werden, dass die die erste natürliche Vorheizzone (Z1) durchströmenden Gasströme (30, 31) ab den aus der zweiten natürlichen Vorheizzone (Z2) austretenden Gasströmen (31) überwacht werden, um die Erwärmung der Trennwände und Anoden in der ersten natürlichen Vorheizzone (Z1) zu regeln und die Positionierung der Entgasungsfront zu kontrollieren.

2. Verfahren nach Anspruch 1, bei dem die aus der zweiten natürlichen Vorheizzone austretenden Gase (31) gekühlt werden, bevor sie die erste natürliche Vorheizzone (Z1) durchströmen.

3. Verfahren nach einem der vorhergehenden Ansprüche, bei dem von außerhalb der Trennwände (4) zwischen der ersten und zweiten natürlichen Vorheizzone kommende Außenluft (30) in die Trennwände eingebracht wird.

4. Verfahren nach einem der vorhergehenden Ansprüche, bei dem die zwischen der ersten und zweiten natürlichen Vorheizzone angeordneten Arbeitsöffnungen (11') ganz oder teilweise geöffnet werden, um die aus der zweiten natürlichen Vorheizzone (Z2) austretenden Gase (31) durch Eintritt von Außenluft zu kühlen.

5. Verfahren nach Anspruch 3 oder Anspruch 4, bei dem der Durchsatz des von den Saugstutzen angesaugten Gases erhöht wird, um den Durchsatz des aus der zweiten natürlichen Vorheizzone austretenden Gasstroms beim Einbringen von Luft oder Öffnen der Arbeitsöffnungen aufrechtzuerhalten.

6. Verfahren nach einem der Ansprüche 4 und 5, bei dem die zwischen der ersten natürlichen Vorheizzone (Z1) und der zweiten natürlichen Vorheizzone (Z2) angeordneten Arbeitsöffnungen mit einem Ventilsystem (52) ausgestattet sind und bei dem das Ventilsystem betätigt wird, um die Arbeitsöffnungen (11') zu öffnen.

7. Verfahren nach einem der Ansprüche 4 bis 6, bei dem das Öffnen der Arbeitsöffnungen (11') zeitlich variiert wird.

8. Verfahren nach einem der vorhergehenden Ansprüche, umfassend:
a) pro Leitung das Messen der Temperatur an mindestens einem vorgegebenen Punkt der natürlichen Vorheizzone;
b) das Vergleichen der gemessenen Temperatur mit einer entsprechenden Referenz;
c) das Steuern einer Aktion zur Kühlung der aus der zweiten natürlichen Vorheizzone (Z2) austretenden Gase, bevor diese die erste natürliche Vorheizzone (Z1) durchströmen, je nach dem Ergebnis des in Schritt b) durchgeführten Vergleichs.

9. Verfahren nach Anspruch 8, bei dem die Temperatur in der ersten natürlichen Vorheizzone (Z1) und/oder in der zweiten natürlichen Vorheizzone (Z2) gemessen wird.

10. Verfahren nach einem der Ansprüche 8 und 9 und einem der Ansprüche 4 bis 6, bei dem der prozentuale Öffnungsgrad der Arbeitsöffnungen (11') vom Ergebnis des in Schritt b) durchgeführten Vergleichs abhängt.

11. Verfahren nach einem der Ansprüche 6 bis 8, bei dem die Referenz (59, 59') für den in Schritt b) durchgeführten Vergleich ein Gesetz ist, welches die Temperatur in Abhängigkeit von der Zeit ausdrückt.

12. Verfahren nach einem der Ansprüche 1 bis 7, welches das Steuern einer Aktion zur Kühlung der aus der zweiten natürlichen Vorheizzone (Z2) austretenden Gase, bevor diese die erste natürliche Vorheizzone (Z1) durchströmen, in Abhängigkeit von der Zeit umfasst.

13. Verfahren nach einem der vorhergehenden Ansprüche, bei dem an den Arbeitsöffnungen (11') des Ofens eine Vielzahl flexibler Manschetten (50) angebracht werden, welche mit einem Ventilsystem (52) zum Öffnen und Schließen der Arbeitsöffnungen (11') ausgestattet sind.

14. Verfahren nach Anspruch 1, bei dem wenigstens ein Teil des aus der zweiten natürlichen Vorheizzone (Z2) austretenden Gasstroms aus den hohlen Trennwänden (4) herausgeführt wird.

15. Verfahren nach Anspruch 14, bei dem die stromaufwärtige Rampe pro Trennwand (4) einen ersten Saugstutzen (70) und einen zweiten Saugstutzen (72) für Gas mit einem Ventilsystem (74) aufweist und bei dem der erste Saugstutzen (70) an einer stromabwärts der ersten natürlichen Vorheizzone (Z1) angeordneten Wandöffnung (11) und der zweite Saugstutzen (72) an einer zwischen der ersten natürlichen Vorheizzone (Z1) und der zweiten natürlichen Vorheizzone (Z2) angeordneten Wandöffnung (11') angebracht wird.

16. Verfahren nach Anspruch 15, bei dem das Ventilsystem (74) gesteuert wird, um den Durchsatz des die erste natürliche Vorheizzone (Z1) durchströmenden Gasstroms zu regeln.

17. Verfahren nach Anspruch 14, bei dem die Verschiebung der stromabwärtigen Rampe in Bezug auf den Rest des drehenden Heizsystems verzögert wird.

18. Verfahren nach einem der vorhergehenden Ansprüche, welches an einem Ofen mit Trennwänden ohne Umlenkbleche durchgeführt wird.

19. Verfahren nach einem der vorhergehenden Ansprüche, welches an einem Ofen durchgeführt wird, der mit langen Arbeitszyklen von mehr als 33 Stunden betrieben wird.

20. Ofen (1) zum Brennen von Kohlenstoffanoden (17) für die Erzeugung von Aluminium durch Elektrolyse, umfassend:
- längsverlaufende hohle Trennwände (4), in denen jeweils ein Strom heißer Brenngase mit einem bestimmten Durchsatz bei einer bestimmten Temperatur zirkulieren kann, wobei die hohlen Trennwände zwischen sich Zellen (5) zur Aufnahme der zu brennenden Anoden definieren und eine Vielzahl von Arbeitsöffnungen (11, 11') aufweisen,
- ein sich gegenüber den hohlen Trennwänden drehendes Heizsystem, welches eine stromaufwärtige Rampe (19) mit mehreren Blasstutzen (20) zum Einblasen von Luft in die einzelnen hohlen Trennwände (4), eine stromabwärtige Rampe (13) mit mehreren Saugstutzen (12) zum Ansaugen von Luft aus den einzelnen hohlen Trennwänden (4) und zwischen der stromaufwärtigen (19) und der stromabwärtigen Rampe (13) mindestens eine Heizrampe (21, 22, 23) mit mindestens einem Brenner oder mindestens einer Brennstoffeinspritzdüse pro Wand aufweist;
wobei in den hohlen Trennwänden (4) zwischen den Blasstutzen (20) und den entsprechenden Saugstutzen (12) Leitungen für die Zirkulation der Gasströme (24) in den hohlen Trennwänden (4) ausgebildet sind;
wobei eine natürliche Vorheizzone des Ofens stromabwärts der Heizrampe definiert ist, an der die Anoden brennbare flüchtige Bestandteile freisetzen, die in den Trennwänden verbrennen und dabei eine Entgasungsfront zum Vorheizen der Gase, Trennwände und Anoden bilden, wobei diese natürliche Vorheizzone in mindestens eine erste natürliche Vorheizzone (Z1), welche in einem ersten Abstand zur Heizrampe liegt, und eine zweite Vorheizzone (Z2), welche in einem zweiten Abstand zur Heizrampe liegt, aufgeteilt ist, wobei der erste Abstand größer ist als der zweite Abstand, und
**dadurch gekennzeichnet, dass** er für die Durchführung des Verfahrens nach einem der vorhergehenden Ansprüche geeignet ist und aufweist:
- Messmittel (27, 56) zum Messen der Temperatur in der natürlichen Vorheizzone (Z1, Z2);
- Analysemittel (58) zum Vergleichen dieser Temperatur mit einer entsprechenden Referenz;
- Steuermittel (60) zum Steuern einer Aktion für die Kühlung der die erste natürliche Vorheizzone (Z1) durchströmenden Gase je nach dem Ergebnis des mit den Analysemitteln (58) durchgeführten Vergleichs;
- Kühlmittel zum Kühlen der aus der zweiten natürlichen Vorheizzone (Z2) austretenden Gase, bevor diese die erste natürliche Vorheizzone (Z1) durchströmen, wobei die Kühlmittel Arbeitsöffnungen, die geöffnet werden können, oder in den Arbeitsöffnungen (11') steckende flexible Manschetten (50) aufweisen, welche mit einem Ventilsystem (52) zum Einstellen des prozentualen Öffnungsgrades der Arbeitsöffnungen (11') ausgestattet sind.

## Claims

1. Control process for a furnace (1) for baking carbon anodes (17) for the production of aluminum by electrolysis, the furnace including:
- longitudinal hollow partitions (4) in each of which a hot baking gas flow may circulate at a certain flow rate and at a certain temperature, the hollow partitions defining together in-between cells (5) to receive the anodes to be baked and including a plurality of peepholes,
- and a heating system, rotating in relation to the hollow partitions, which comprises an upstream ramp (19) of several blowing legs (20) blowing air into the various hollow partitions (4), a downstream ramp (13) of several suction legs (12) sucking gas from the various hollow partitions and, between said upstream (19) and downstream (13) ramps, at least one heating ramp (21, 22, 23) equipped with at least one burner or at least one fuel injector per partition;
lines for gas flows (24) to circulate in the hollow partitions (4) being formed in the hollow partitions (4) between the blowing legs (20) and the corresponding suction legs (12);
the process including a natural pre-heating phase for the partitions and anodes during which the anodes release combustible volatile matter which burns inside the hollow partitions forming a degassing front to pre-heat the gases, the partitions and the anodes, this natural pre-heating phase being carried out in a natural pre-heating zone of the furnace downstream of the heating ramp,
**characterized in that** the natural pre-heating zone is divided into at least one first natural pre-heating zone (Z1) located at a first distance from the heating ramp and a second natural pre-heating zone (Z2) located at a second distance from the heating ramp, the first distance being larger than the second distance,
and in which gas flows circulating in the hollow partitions are modified so as to control gas flows (30,31) passing through the first natural pre-heating zone (Z1) from gas flows (31) leaving the second natural pre-heating zone (Z2) to regulate the rise in temperature of the partitions and the anodes in the first natural pre-heating zone (Z1) and control the location of the degassing front.

2. Process according to claim 1, in which the gases (31) which leave the second natural pre-heating zone are cooled before they pass through the first natural pre-heating zone (Z1).

3. Process according to one of the preceding claims, into which outside air (30) coming from outside partitions (4) between the first and the second natural pre-heating zone is introduced into the partitions

4. Process according to one of the preceding claims, in which peepholes (11') placed between the first and the second natural pre-heating zone are fully or partly opened to cool the gases (31) leaving the second natural pre-heating zone (Z2) by inputting outside air.

5. Process according to claim 3 or claim 4 in which the gas flow rate sucked in by the suction legs is increased to maintain the flow rate of the flow of gas leaving the second pre-heating zone during introduction of outside air or when the peepholes are opened.

6. Process according to one of claims 4 and 5, in which the peepholes placed between the first natural pre-heating zone (Z1) and the second natural pre-heating zone (Z2) are provided with a valve system (52) and in which the valve system is actuated to open peepholes (11').

7. Process according to one of claims 4 to 6, in which the opening of peepholes (11') is varied in time.

8. Process according to one of the preceding claims including:
a) for each line, measurement of the temperature at at least one given point of the natural pre-heating zone;
b) comparison of the temperature measured with a corresponding reference;
c) ordering an action for the cooling of gases leaving the second natural pre-heating zone (Z2) before passing through the first natural pre-heating zone (Z1) according to the result of the comparison carried out at stage b).

9. Process according to claim 8, in which the temperature is measured in the first natural pre-heating zone (Z1) and/or in the second natural pre-heating zone (Z2).

10. Process according to one of claims 8 and 9 and one of claims 4 to 6, in which the opening percentage of the peepholes (11') depend of the result of the comparison carried out at stage b).

11. Process according to one of claims 6 to 8, in which the reference (59, 59') for the comparison carried out at stage b) is a law expressing the temperature according to time.

12. Process according to one of claims 1 to 7, including the ordering of an action for the cooling the gases leaving the second natural pre-heating zone (Z2) before passing through the first natural pre-heating zone (Z1) as a function of time.

13. Process according to one of the preceding claims, in which a plurality of flexible sleeves (50) provided with a valve system (52) for opening and closing peepholes (11') is installed on the peepholes (11') of the furnace.

14. Process according to claim 1, in which at least part of the gas flow leaving the second natural pre-heating zone (Z2) is diverted outside hollow partitions (4).

15. Process according to claim 14, in which the downstream ramp comprises, per partition (4), a first gas suction leg (70) and a second gas suction leg (72) provided with a valve system (74), and in which the first suction leg (70) is fitted onto a peephole (11) placed downstream of the first natural pre-heating zone (Z1) and the second suction leg (72) on a peephole (11') placed between the first natural pre-heating zone (Z1) and the second natural pre-heating zone (Z2).

16. Process according to claim 15, in which the valve system (74) is controlled so as to regulate the flow rate of the gas flow passing through the first natural pre-heating zone (Z1).

17. Process according to claim 14, in which the movement of the downstream suction ramp is delayed in relation to the rest of the rotating heating system.

18. Process according to one of the preceding claims, implemented on a furnace with partitions without baffles.

19. Process according to one of the preceding claims, implemented on a furnace operating with cycles longer than 33 hours.

20. Furnace (1) for baking carbon anodes (17) for the production of aluminum by electrolysis including:
- longitudinal hollow partitions (4) in each of which a hot baking gas flow may circulate at a certain flow rate and at a certain temperature, the hollow partitions defining together in-between cells (5) to receive the anodes to be baked and including a plurality of peepholes (11, 11'),
- a heating system, rotating in relation to the hollow partitions, which comprises an upstream ramp (19) of several blowing legs (20) blowing air into the various hollow partitions (4), a downstream ramp (13) of several suction legs (12) sucking gas from the various hollow partitions (4) and, between said upstream (19) and downstream (13) ramps, at least one heating ramp (21, 22, 23) equipped with at least one burner or at least one fuel injector per partition;
lines for gas flows (24) to circulate in the hollow partitions (4) being formed in the hollow partitions (4) between blowing legs (20) and corresponding suction legs (12);
a natural pre-heating zone of the furnace being defined downstream of the heating ramp on which the anodes release the combustible volatile matter which burns in the partitions, forming a degassing front to pre-heat the gases, the partitions and the anodes, this natural pre-heating zone being divided into at least one first natural pre-heating zone (Z1) located at a first distance from the heating ramp, and a second natural pre-heating zone (Z2) located at a second distance from the heating ramp, the first distance being greater than the second distance, and,
**characterized in that** it is adapted for the implementation of the process according to one of the preceding claims and includes:
- means of temperature measurement (27, 56) in the natural pre-heating zone (Z1, Z2),
- means of analysis (58) able to compare this temperature with a corresponding reference;
- means of control (60) able to order an action for cooling the gases passing through the first natural pre-heating zone (Z1) according to the result of the comparison carried out by the means of analysis (58).
- means of cooling able to cool the gases leaving the second natural pre-heating zone (Z2) before they pass through the first natural pre-heating zone (Z1), the means of cooling including peepholes that can be opened or flexible sleeves (50) inserted in the peepholes (11') and provided with a valve system (52) to adjust the percentage of opening of peepholes (11').
